(19) **Europäisches Patentamt / European Patent Office / Office européen des brevets**

(11) **EP 4 513 980 A1**

(12) **EUROPEAN PATENT APPLICATION**
published in accordance with Art. 153(4) EPC

(43) Date of publication:
26.02.2025 Bulletin 2025/09

(21) Application number: 23792075.6

(22) Date of filing: 06.04.2023

(51) International Patent Classification (IPC):
$H04W\ 52/02^{(2009.01)}$    $H04B\ 7/06^{(2006.01)}$
$H04W\ 72/23^{(2023.01)}$    $H04W\ 76/28^{(2018.01)}$
$H04B\ 7/08^{(2006.01)}$

(52) Cooperative Patent Classification (CPC):
H04B 7/06; H04B 7/08; H04W 52/02; H04W 72/23;
H04W 76/28

(86) International application number:
PCT/KR2023/004654

(87) International publication number:
WO 2023/204495 (26.10.2023 Gazette 2023/43)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 22.04.2022 KR 20220050046
10.08.2022 KR 20220100223
28.09.2022 KR 20220123756
11.10.2022 KR 20220129909
03.11.2022 KR 20220145522

(71) Applicant: LG Electronics Inc.
Yeongdeungpo-gu
Seoul 07336 (KR)

(72) Inventors:
• KIM, Seonwook
Seoul 06772 (KR)
• KIM, Kijun
Seoul 06772 (KR)
• KIM, Jaehyung
Seoul 06772 (KR)
• YANG, Suckchel
Seoul 06772 (KR)
• KANG, Jiwon
Seoul 06772 (KR)
• PARK, Haewook
Seoul 06772 (KR)
• KIM, Kyuseok
Seoul 06772 (KR)

(74) Representative: Mooser, Sebastian Thomas
Wuesthoff & Wuesthoff
Patentanwälte und Rechtsanwalt PartG mbB
Schweigerstraße 2
81541 München (DE)

(54) **METHOD FOR TRANSMITTING/RECEIVING CHANNEL STATE INFORMATION, AND DEVICE THEREFOR**

(57) The present disclosure provides a method by which a terminal receives a channel state information - reference signal (CSI-RS) in a wireless communication system. In particular, the method comprises: receiving first information related to a first CSI group associated with one or more first CSI-RS resources, and a second CSI group associated with one or more second CSI-RS resources; receiving second information informing that the first CSI group is available from among the first CSI group and the second CSI group; and receiving the CSI-RS through the one or more first CSI-RS resources, wherein all of the one or more first CSI-RS resources correspond to the number of first antenna ports, and all of the one or more second CSI-RS resources correspond to the number of second antenna ports.

EP 4 513 980 A1

# FIG. 10

| UE | | BS |
|---|---|---|

Transmit (i) first information related to a plurality of CSI-RS resource sets (or a plurality of CSI-RS resources) and (ii) second information related to CSI group index for each of the plurality of CSI-RS resource sets (or the plurality of CSI-RS resources) — S1001

Transmit DCI (or MAC CE) including activated CSI group index — S1003

Transmit CSI-RS based on DCI (or MAC CE) — S1005

Report CSI based on CSI-RS — S1007

**Description**

[TECHNICAL FIELD]

The disclosure relates to a method and apparatus for transmitting and receiving channel state information (CSI), and more particularly, to a method and apparatus for measuring CSI and transmitting and receiving the CSI, based on a plurality of CSI groups linked to different numbers of antenna ports.

[BACKGROUND]

As more and more communication devices demand larger communication traffic along with the current trends, a future-generation 5th generation (5G) system is required to provide an enhanced wireless broadband communication, compared to the legacy LTE system. In the future-generation 5G system, communication scenarios are divided into enhanced mobile broadband (eMBB), ultra-reliability and low-latency communication (URLLC), massive machine-type communication (mMTC), and so on.

Herein, eMBB is a future-generation mobile communication scenario characterized by high spectral efficiency, high user experienced data rate, and high peak data rate, URLLC is a future-generation mobile communication scenario characterized by ultra-high reliability, ultra-low latency, and ultra-high availability (e.g., vehicle to everything (V2X), emergency service, and remote control), and mMTC is a future-generation mobile communication scenario characterized by low cost, low energy, short packet, and massive connectivity (e.g., Internet of things (IoT)).

[DISCLOSURE]

[Technical Problem]

An object of the disclosure is to provide a method of transmitting and receiving channel state information and an apparatus therefor.

It will be appreciated by persons skilled in the art that the objects that could be achieved with the disclosure are not limited to what has been particularly described hereinabove and the above and other objects that the disclosure could achieve will be more clearly understood from the following detailed description.

[Technical Solution]

A method of receiving a channel state information-reference signal (CSI-RS) by a user equipment (UE) in a wireless communication system according to an embodiment of the disclosure may include receiving first information related to a first CSI group associated with at least one first CSI-RS resource and a second CSI group associated with at least one second CSI-RS resource, receiving second information informing that the first CSI group out of the first CSI group and the second CSI group is available, and receiving the CSI-RS through the at least one first CSI-RS resource. The at least one first CSI-RS resource may correspond to a first number of antenna ports, and the at least one second CSI-RS resource may correspond to a second number of antenna ports. The first number of the antenna ports and the second number of antenna ports may be different.

The at least one first CSI-RS resource may be related to first codebook configuration information, and the at least one second CSI-RS resource may be related to second codebook configuration information.

Further, the first number of antenna ports may be less than the second number of antenna ports.

Further, a physical downlink shared channel (PDSCH) having a quasi co-located (QCL) relationship with the at least one second CSI-RS resource may not be received.

Further, the method further include receiving a PDSCH corresponding to a plurality of transmission configuration indicator (TCI) states, and the PDSCH may be received based on a TCI state associated with the at least one first CSI-RS resource among the plurality of TCI states.

Further, the CSI-RS may not be received through the at least one second CSI-RS resource.

Further, the at least one first CSI-RS resource and the at least one second CSI-RS resource may be included in the same CSI-RS resource set.

Further, the at least one first CSI-RS resource and the at least one second CSI-RS resource may be included in different CSI-RS resource sets.

A UE for receiving a CSI-RS in a wireless communication system according to the disclosure may include at least one transceiver, at least one processor, and at least one memory operably connected to the at least one processor and storing instructions which when executed, cause the at least one processor to perform operations. The operations may include receiving first information related to a first CSI group associated with at least one first CSI-RS resource and a second CSI group associated with at least one second CSI-RS resource through the at least one transceiver, receiving second information informing that the first CSI group out of the first CSI group and the second CSI group is available through the at least one transceiver, and receiving the CSI-RS through the at least one first CSI-RS resource through the at least one transceiver. The at least one first CSI-RS resource may correspond to a first number of antenna ports, and the at least one second CSI-RS resource may correspond to a second number of antenna ports. The first number of the antenna ports and the second number of antenna ports may be different.

The at least one first CSI-RS resource may be related to first codebook configuration information, and the at least one second CSI-RS resource may be related to second codebook configuration information.

Further, the first number of antenna ports may be less than the second number of antenna ports.

Further, a PDSCH having a QCL relationship with the at least one second CSI-RS resource may not be received.

Further, the operations further include receiving a PDSCH corresponding to a plurality of TCI states, and the PDSCH may be received based on a TCI state associated with the at least one first CSI-RS resource among the plurality of TCI states.

Further, the CSI-RS may not be received through the at least one second CSI-RS resource.

Further, the at least one first CSI-RS resource and the at least one second CSI-RS resource may be included in the same CSI-RS resource set.

Further, the at least one first CSI-RS resource and the at least one second CSI-RS resource may be included in different CSI-RS resource sets.

An apparatus for receiving a CSI-RS in a wireless communication system according to the disclosure may include at least one processor, and at least one memory operably connected to the at least one processor and storing instructions which when executed, cause the at least one processor to perform operations. The operations may include receiving first information related to a first CSI group associated with at least one first CSI-RS resource and a second CSI group associated with at least one second CSI-RS resource, receiving second information informing that the first CSI group out of the first CSI group and the second CSI group is available, and receiving the CSI-RS through the at least one first CSI-RS resource. The at least one first CSI-RS resource may correspond to a first number of antenna ports, and the at least one second CSI-RS resource may correspond to a second number of antenna ports. The first number of the antenna ports and the second number of antenna ports may be different.

A computer-readable storage medium according to the disclosure may include at least one computer program causing at least one processor to perform operations. The operations may include receiving first information related to a first CSI group associated with at least one first CSI-RS resource and a second CSI group associated with at least one second CSI-RS resource, receiving second information informing that the first CSI group out of the first CSI group and the second CSI group is available, and receiving the CSI-RS through the at least one first CSI-RS resource. The at least one first CSI-RS resource may correspond to a first number of antenna ports, and the at least one second CSI-RS resource may correspond to a second number of antenna ports. The first number of the antenna ports and the second number of antenna ports may be different.

A method of transmitting a CSI-RS by a base station (BS) in a wireless communication system according to an embodiment of the disclosure may include transmitting first information related to a first CSI group associated with at least one first CSI-RS resource and a second CSI group associated with at least one second CSI-RS resource, transmitting second information informing that the first CSI group out of the first CSI group and the second CSI group is available, and transmitting the CSI-RS through the at least one first CSI-RS resource. The at least one first CSI-RS resource may correspond to a first number of antenna ports, and the at least one second CSI-RS resource may correspond to a second number of antenna ports. The first number of the antenna ports and the second number of antenna ports may be different.

A BS for transmitting a CSI-RS in a wireless communication system according to the disclosure may include at least one transceiver, at least one processor, and at least one memory operably connected to the at least one processor and storing instructions which when executed, cause the at least one processor to perform operations. The operations may include transmitting first information related to a first CSI group associated with at least one first CSI-RS resource and a second CSI group associated with at least one second CSI-RS resource through the at least one transceiver, transmitting second information informing that the first CSI group out of the first CSI group and the second CSI group is available through the at least one transceiver, and transmitting the CSI-RS through the at least one first CSI-RS resource through the at least one transceiver. The at least one first CSI-RS resource may correspond to a first number of antenna ports, and the at least one second CSI-RS resource may correspond to a second number of antenna ports. The first number of the antenna ports and the second number of antenna ports may be different.

[Advantageous Effects]

According to the disclosure, the power consumption of a BS may be reduced by providing a mechanism in which the BS dynamically turns on and off some antenna ports in consideration of communication states with associated UEs, a data amount, and so on.

It will be appreciated by persons skilled in the art that the effects that can be achieved with the disclosure are not limited to what has been particularly described hereinabove and other advantages of the disclosure will be more clearly understood from the following detailed description taken in conjunction with the accompanying drawings.

[BRIEF DESCRIPTION OF DRAWINGS]

FIG. 1 is a diagram illustrating network energy saving.
FIG. 2 is a diagram illustrating analog beamforming in the NR system.
FIGS. 3 to 7 are diagrams illustrating beam management in an NR system.
FIGS. 8 to 10 are diagrams illustrating overall operation procedures of a user equipment (UE) and a base station (BS) according to an embodiment of the disclosure.
FIG. 11 illustrates the structure of a medium access control control element (MAC CE) for activating or deactivating an SP CSI-RS resource set.
FIG. 12 illustrates an exemplary communication system applied to the disclosure.
FIG. 13 illustrates an exemplary wireless device applicable to the disclosure.
FIG. 14 illustrates an exemplary vehicle or autonomous driving vehicle applicable to the disclosure.

[DETAILED DESCRIPTION]

The following technology may be used in various wireless access systems such as code division multiple access (CDMA), frequency division multiple access (FDMA), time division multiple access (TDMA), orthogonal frequency division multiple access (OFDMA), single carrier frequency division multiple access (SC-FDMA), and so on. CDMA may be implemented as a radio technology such as universal terrestrial radio access (UTRA) or CDMA2000. TDMA may be implemented as a radio technology such as global system for mobile communications (GSM)/general packet radio service (GPRS)/enhanced data rates for GSM evolution (EDGE). OFDMA may be implemented as a radio technology such as institute of electrical and electronics engineers (IEEE) 802.11 (wireless fidelity (Wi-Fi)), IEEE 802.16 (worldwide interoperability for microwave access (WiMAX)), IEEE 802.20, evolved UTRA (E-UTRA), and so on. UTRA is a part of universal mobile telecommunications system (UMTS). 3rd generation partnership project (3GPP) long term evolution (LTE) is a part of evolved UMTS (E-UMTS) using E-UTRA, and LTE-advanced (LTE-A) is an evolution of 3GPP LTE. 3GPP new radio or new radio access technology (NR) is an evolved version of 3GPP LTE/LTE-A.

While the following description is given in the context of a 3GPP communication system (e.g., NR) for clarity, the technical spirit of the disclosure is not limited to the 3GPP communication system. For the background art, terms, and abbreviations used in the disclosure, refer to the technical specifications published before the disclosure (e.g., 38.211, 38.212, 38.213, 38.214, 38.300, 38.331, and so on).

5G communication involving a new radio access technology (NR) system will be described below.

Three key requirement areas of 5G are (1) enhanced mobile broadband (eMBB), (2) massive machine type communication (mMTC), and (3) ultra-reliable and low latency communications (URLLC).

Some use cases may require multiple dimensions for optimization, while others may focus only on one key performance indicator (KPI). 5G supports such diverse use cases in a flexible and reliable way.

eMBB goes far beyond basic mobile Internet access and covers rich interactive work, media and entertainment applications in the cloud or augmented reality (AR). Data is one of the key drivers for 5G and in the 5G era, we may for the first time see no dedicated voice service. In 5G, voice is expected to be handled as an application program, simply using data connectivity provided by a communication system. The main drivers for an increased traffic volume are the increase in the size of content and the number of applications requiring high data rates. Streaming services (audio and video), interactive video, and mobile Internet connectivity will continue to be used more broadly as more devices connect to the Internet. Many of these applications require always-on connectivity to push real time information and notifications to users. Cloud storage and applications are rapidly increasing for mobile communication platforms. This is applicable for both work and entertainment. Cloud storage is one particular use case driving the growth of uplink data rates. 5G will also be used for remote work in the cloud which, when done with tactile interfaces, requires much lower end-to-end latencies in order to maintain a good user experience. Entertainment, for example, cloud gaming and video streaming, is another key driver for the increasing need for mobile broadband capacity. Entertainment will be very essential on smart phones and tablets everywhere, including high mobility environments such as trains, cars and airplanes. Another use case is AR for entertainment and information search, which requires very low latencies and significant instant data volumes.

One of the most expected 5G use cases is the functionality of actively connecting embedded sensors in every field, that is, mMTC. It is expected that there will be 20.4 billion potential Internet of things (IoT) devices by 2020. In industrial IoT, 5G is one of areas that play key roles in enabling smart city, asset tracking, smart utility, agriculture, and security infrastructure.

URLLC includes services which will transform industries with ultra-reliable/available, low latency links such as remote control of critical infrastructure and self-driving vehicles. The level of reliability and latency are vital to smart-grid control, industrial automation, robotics, drone control and coordination, and so on.

Now, multiple use cases in a 5G communication system including the NR system will be described in detail.

5G may complement fiber-to-the home (FTTH) and cable-based broadband (or data-over-cable service interface specifications (DOCSIS)) as a means of providing streams at data rates of hundreds of megabits per second to giga bits per second. Such a high speed is required for TV broadcasts at or above a resolution of 4K (6K, 8K, and higher) as well as virtual reality (VR) and AR. VR and AR applications mostly include immersive sport games. A special network configuration may be required for a specific application program. For VR games, for example, game companies may have to integrate a core server with an edge network server of a network operator in order to minimize latency.

The automotive sector is expected to be a very important new driver for 5G, with many use cases for mobile communications for vehicles. For example, entertainment for passengers requires simultaneous high capacity and high mobility mobile broadband, because future users will expect to continue their good quality connection independent of their location and speed. Other use cases for the automotive sector are AR dashboards. These display overlay information on top of what a driver is seeing through the front window, identifying objects in the dark and telling the driver about the distances and movements of the objects. In the future, wireless modules will enable communication between vehicles themselves, information exchange between vehicles and supporting infrastructure and between vehicles and other connected devices (e.g., those carried by pedestrians). Safety systems may guide drivers on alternative courses of action to allow them to drive more safely and lower the risks of accidents. The next stage will be remote-controlled or self-driving vehicles. These require very reliable, very fast communication between different self-driving vehicles and between vehicles and infrastructure. In the future, self-driving vehicles will execute all driving activities, while drivers are focusing on traffic abnormality elusive to the vehicles themselves. The technical requirements for self-driving vehicles call for ultra-low latencies and ultra-high reliability, increasing traffic safety to levels humans cannot achieve. Smart cities and smart homes, often referred to as smart society, will be embedded with dense wireless sensor networks. Distributed networks of intelligent sensors will identify conditions for cost- and energy-efficient maintenance of the city or home. A similar setup may be done for each home, where temperature sensors, window and heating controllers, burglar alarms, and home appliances are all connected wirelessly. Many of these sensors are typically characterized by low data rate, low power, and low cost, but for example, real time high definition (HD) video may be required in some types of devices for surveillance.

The consumption and distribution of energy, including heat or gas, is becoming highly decentralized, creating the need for automated control of a very distributed sensor network. A smart grid interconnects such sensors, using digital information and communications technology to gather and act on information. This information may include information about the behaviors of suppliers and consumers, allowing the smart grid to improve the efficiency, reliability, economics and sustainability of the production and distribution of fuels such as electricity in an automated fashion. A smart grid may be seen as another sensor network with low delays.

The health sector has many applications that may benefit from mobile communications. Communications systems enable telemedicine, which provides clinical health care at a distance. It helps eliminate distance barriers and may improve access to medical services that would often not be consistently available in distant rural communities. It is also used to save lives in critical care and emergency situations. Wireless sensor networks based on mobile communication may provide remote monitoring and sensors for parameters such as heart rate and blood pressure.

Wireless and mobile communications are becoming increasingly important for industrial applications. Wires are expensive to install and maintain, and the possibility of replacing cables with reconfigurable wireless links is a tempting opportunity for many industries. However, achieving this requires that the wireless connection works with a similar delay, reliability and capacity as cables and that its management is simplified. Low delays and very low error probabilities are new requirements that need to be addressed with 5G.

Finally, logistics and freight tracking are important use cases for mobile communications that enable the tracking of inventory and packages wherever they are by using location-based information systems. The logistics and freight tracking use cases typically require lower data rates but need wide coverage and reliable location information.

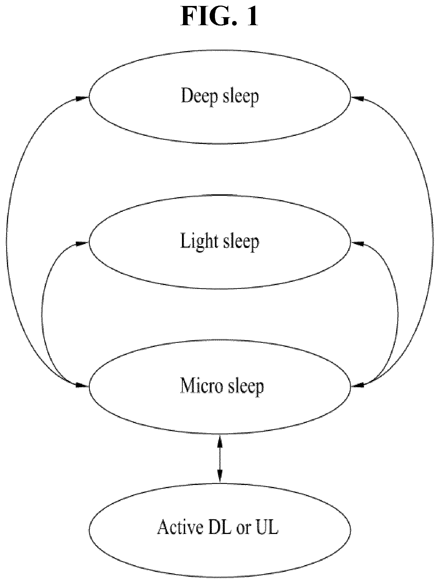

FIG. 1 is a diagram illustrating Network Energy Saving (NES) according to the disclosure.

It has been reported that a New Rat (NR) base station (BS) consumes 3 to 4 times more power than a Long Term Evolution (LTE) BS due to a higher density of installed BSs and use of more antennas/bandwidths/frequency bands in a comparison between the NR system and the LTE system. To solve the problem of the resulting increased operating costs for operators and build an eco-friendly network, a study item was approved to discuss methods of reducing energy consumption of BSs.

In 3GPP RAN WG1, an energy consumption model and simulation methodology for BSs was defined to show that energy consumption gains may be obtained by applying NES technology. Specifically, a sleep state (i.e., a state in which a BS does not perform either of transmission and reception) and an active state (i.e., a state in which the BS performs transmission and/or reception) were defined for BSs, and a transition method for each state was determined, as illustrated in FIG. 1. In addition, a relative power value consumed by a BS in each state, a time and energy required for state transition, and so on were modeled.

The techniques discussed in 3GPP RAN WG1 for NES may be largely classified into four domains (i.e., time/frequency/space/power domains), and the specific techniques for each domain may be summarized as in [Table 1].

[Table 1]

| Time domain techniques | |
|---|---|
| A-1 | Adaptation of common signals and channels |
| A-2 | Dynamic adaptation of UE specific signals and channels |
| A-3 | Wake up of qNB triggered by UE wake up signal |
| A-4 | Adaptation of DTX/DRX |
| A-5 | Adaptation of SSB/SIB1 |
| Frequency domain techniques | |
| B-1 | Multi-carrier energy savings enhancements |
| B-2 | Dynamic adaptation of bandwidth part of UE(s) within a carrier |
| B-3 | Dynamic adaptation of bandwidth of active BWP |
| Spatial domain techniques | |
| C-1 | Dynamic adaptation of spatial elements |
| C-2 | TRP mutinq/adaptation in multi-TRP operation |
| Power domain techniques | |
| D-1 | Adaptation of transmission power of signals and channels |
| D-2 | Enhancements to assist qNB digital pre-distortion |
| D-3 | Adaptation of transceiver processing algorithm |
| D-4 | PA backoff adaptation |
| D-5 | UE post-distortion |

As time domain NES techniques, methods have been discussed such as controlling on/off of a UE-common signal (e.g., SSB, SIB, paging, and so on) or a UE-specific signal (e.g., CSI-RS), such as A-1, A-2, and/or A-5 in Table 1, transmitting a wake-up signal to wake up a BS in an inactive state, such as A-3 in Table 1, or controlling transmission and reception of a UE according to a discontinuous transmission/discontinuous reception (DTX/DRX) pattern of a BS, such as A-4 in Table 1.

As frequency domain NES techniques, methods have been discussed such as an SCell operating without a synchronization signal block (SSB) in an inter-band CA situation, such as B-1 in Table 1, and switching a bandwidth part (BWP) or controlling the bandwidth of a BWP, such as B-2 and/or B-3 in Table 1.

As spatial domain NES techniques, methods of supporting per-antenna port on/off or per-transmission and reception point (TRP) on/off in a BS and improving associated CSI measurement and reporting, such as C-1 and/or C-2 in Table 1, have been discussed.

As power domain NES techniques, methods have been discussed such as increasing transmission efficiency by dynamically changing the power of downlink (DL) signals (e.g., SSB, CSI-RS, and PDSCH), such as D-1 in Table 1, or maximizing power amplifier (PA) efficiency by applying digital distortion compensation or tone reservation for a BS/UE, such as D-2, D-3, D-4 and/or D-5 in Table 1.

Apart from for the techniques (e.g., A-4, A-5, and B-1) commonly discussed in 3GPP RAN WG1 and 3GPP RAN WG2, the techniques discussed in 3GPP RAN WG2 for NES include a method of accessing NES-cells by NES-capable UEs or existing NR UEs, an efficient handover method for a UE being connected to an NES-cell, and so on.

As a result of the RAN#98-e meeting, the NES work items were approved and the discussion topics in each leading WG are as follows. The RAN WG1 leading items include methods (e.g., C-1 and D-1) of supporting on/off of BS antenna ports or dynamically changing a power offset between a physical downlink shared channel (PDSCH) and a channel state information-reference signal (CSI-RS), and enhancing CSI measurement and reporting. The RAN WG2 leading items include a method (e.g., A-4) of controlling transmission and reception of UEs according to a DTX/DRX pattern of a BS, a method of preventing existing NR UEs from accessing an NES-cell, and a conditional handover (CHO) method considering a source or target cell that performs an NES operation. In addition, the RAN WG3 leading items include a method of exchanging information about active beams between nodes and paging through a limited area. The RAN WG4 leading items include an SCell operating without an SSB in an inter-band CA situation (e.g., B-1).

In the NR system, a massive multiple input multiple output (MIMO) environment in which the number of transmission/reception (Tx/Rx) antennas is significantly increased may be under consideration. That is, as the massive MIMO environment is considered, the number of Tx/Rx antennas may be increased to a few tens or hundreds. The NR system supports communication in an above 6 GHz band, that is, a millimeter frequency band. However, the millimeter frequency band is characterized by the frequency property that a signal is very rapidly attenuated according to a distance due to the use of too high a frequency band. Therefore, in an NR system operating at or above 6 GHz, beamforming (BF) is considered, in which a signal is transmitted with concentrated energy in a specific direction, not omnidirectionally, to compensate for rapid propagation attenuation. Accordingly, there is a need for hybrid BF with analog BF and digital BF in combination according to a position to which a BF weight vector/precoding vector is applied, for the purpose of increased performance, flexible resource allocation, and easiness of frequency-wise beam control in the massive MIMO environment.

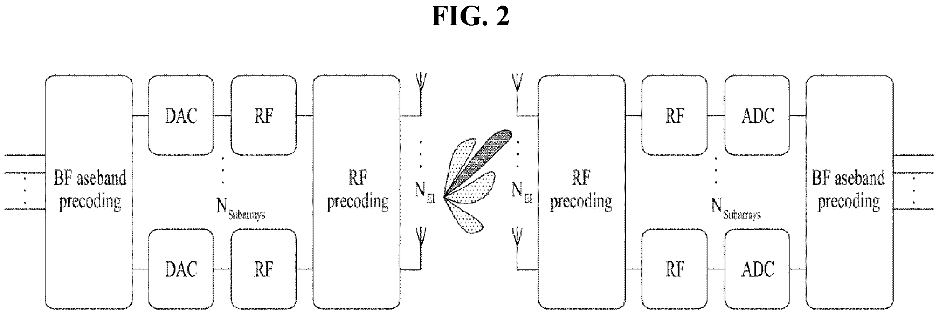

FIG. 2 is a block diagram illustrating an exemplary transmitter and receiver for hybrid BF.

To form a narrow beam in the millimeter frequency band, a BF method is mainly considered, in which a BS or a UE transmits the same signal through multiple antennas by applying appropriate phase differences to the antennas and thus increasing energy only in a specific direction. Such BF methods include digital BF for generating a phase difference for digital baseband signals, analog BF for generating phase differences by using time delays (i.e., cyclic shifts) for modulated analog signals, and hybrid BF with digital BF and analog beamforming in combination. Use of a radio frequency (RF) unit (or transceiver unit (TXRU)) for antenna element to control transmission power and phase control on antenna element basis enables independent BF for each frequency resource. However, installing TXRUs in all of about 100 antenna elements is less feasible in terms of cost. That is, a large number of antennas are required to compensate for rapid propagation attenuation in the millimeter frequency, and digital BF needs as many RF components (e.g., digital-to-analog converters (DACs), mixers, power amplifiers, and linear amplifiers) as the number of antennas. As a consequence, implementation of digital BF in the millimeter frequency band increases the prices of communication devices. Therefore, analog BF or hybrid BF is considered, when a large number of antennas are needed as is the case with the millimeter frequency band. In analog BF, a plurality of antenna elements are mapped to a single TXRU and a beam direction is controlled by an analog phase shifter. Because only one beam direction is generated across a total band in analog BF, frequency-selective BF may not be achieved with analog BF. Hybrid BF is an intermediate form of digital BF and analog BF, using B RF units fewer than Q antenna elements. In hybrid BF, the number of beam directions available for simultaneous transmission is limited to B or less, which depends on how B RF units and Q antenna elements are connected.

Beam Management (BM)

The BM refers to a series of processes for acquiring and maintaining a set of BS beams (transmission and reception point (TRP) beams) and/or a set of UE beams available for DL and UL transmission/reception. The BM may include the following processes and terminology.

- Beam measurement: an operation by which the BS or UE measures the characteristics of a received beamformed signal
- Beam determination: an operation by which the BS or UE selects its Tx/Rx beams
- Beam sweeping: an operation of covering a spatial domain by using Tx and/or Rx beams for a prescribed time interval according to a predetermined method
- Beam report: an operation by which the UE reports information about a signal beamformed based on the beam measurement.

The BM procedure may be divided into (1) a DL BM procedure using an SSB or CSI-RS and (2) a UL BM procedure using an SRS. Further, each BM procedure may include Tx beam sweeping for determining a Tx beam, and Rx beam sweeping for determining an Rx beam.

The DL BM procedure may include (1) transmission of beamformed DL RSs (e.g., CSI-RS or SSB) from the BS and (2) beam reporting from the UE.

A beam report may include preferred DL RS ID(s) and reference signal received power(s) (RSRP(s)) corresponding to the preferred DL RS ID(s). A DL RS ID may be an SSB resource indicator (SSBRI) or a CSI-RS resource indicator (CRI).

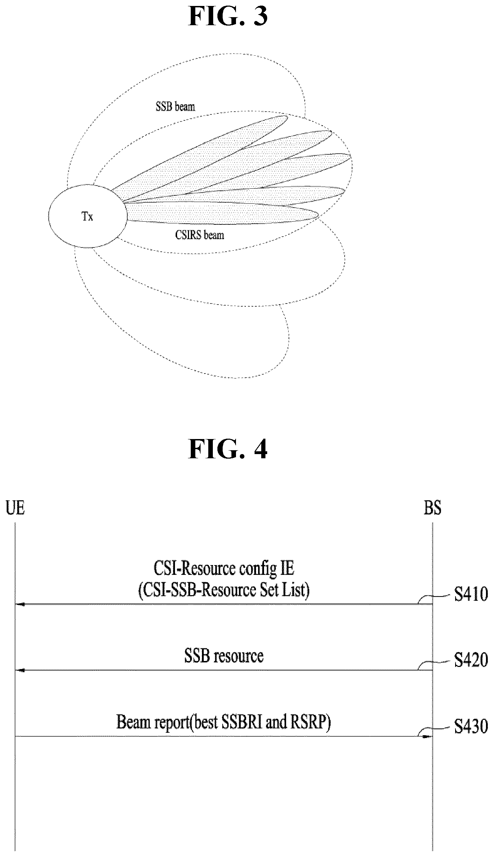

FIG. 3 is a diagram illustrating exemplary BF using an SSB and a CSI-RS.

Referring to FIG. 3, an SSB beam and a CSI-RS beam may be used for beam measurement. A measurement metric is the RSRP of each resource/block. The SSB may be used for coarse beam measurement, whereas the CSI-RS may be used for fine beam measurement. The SSB may be used for both Tx beam sweeping and Rx beam sweeping. SSB-based Rx beam sweeping may be performed by attempting to receive the SSB for the same SSBRI, while changing an Rx beam across multiple SSB bursts at a UE. One SS burst includes one or more SSBs, and one SS burst set includes one or more SSB bursts.

1. DL BM Using SSB

FIG. 4 is a diagram illustrating a signal flow for an exemplary DL BM procedure using an SSB.

An SSB-based beam report is configured during CSI/beam configuration in RRC_CONNECTED mode.

- A UE receives a CSI-ResourceConfig information element (IE) including CSI-SSB-ResourceSetList for SSB resources used for BM from a BS (S410). The radio resource control (RRC) parameter, CSI-SSB-ResourceSetList is a list of SSB resources used for BM and reporting in one resource set. The SSB resource set may be configured as {SSBx1, SSBx2, SSBx3, SSBx4, ...}. SSB indexes may range from 0 to 63.
- The UE receives signals in the SSB resources from the BS based on CSI-SSB-ResourceSetList (S420).
- When CSI-RS reportConfig related to an SSBRI and RSRP reporting has been configured, the UE reports a best SSBRI and an RSRP corresponding to the best SSBRI to the BS (S430). For example, when reportQuantity in the CSI-RS reportConfig IE is set to 'ssb-Index-RSRP', the UE reports the best SSBRI and the RSRP corresponding to the best SSBRI to the BS.

When CSI-RS resources are configured in OFDM symbol(s) carrying an SSB and 'QCL-TypeD' is applicable to the CSI-RS resources and the SSB, the UE may assume that a CSI-RS and the SSB are quasi-co-located (QCLed) from the perspective of 'QCL-TypeD'. QCL-TypeD may mean that antenna ports are QCLed from the perspective of spatial Rx parameters. When the UE receives signals from a plurality of DL antenna ports placed in the QCL-TypeD relationship, the UE may apply the same Rx beam to the signals

2. DL BM Using CSI-RS

The CSI-RS serves the following purposes: i) when Repetition is configured and TRS_info is not configured for a specific CSI-RS resource set, the CSI-RS is used for BM; ii) when Repetition is not configured and TRS_info is configured for the specific CSI-RS resource set, the CSI-RS is used for a tracking reference signal (TRS); and iii) when either of Repetition or TRS_info is configured for the specific CSI-RS resource set, the CSI-RS is used for CSI acquisition.

When (the RRC parameter) Repetition is set to 'ON', this is related to the Rx beam sweeping process of the UE. In the case where Repetition is set to 'ON', when the UE is configured with NZP-CSI-RS-ResourceSet, the UE may assume that signals in at least one CSI-RS resource within NZP-CSI-RS-ResourceSet are transmitted through the same DL spatial domain filter. That is, the at least one CSI-RS resource within NZP-CSI-RS-ResourceSet is transmitted on the same Tx beam. The signals in the at least one CSI-RS resource within NZP-CSI-RS-ResourceSet may be transmitted in different OFDM symbols.

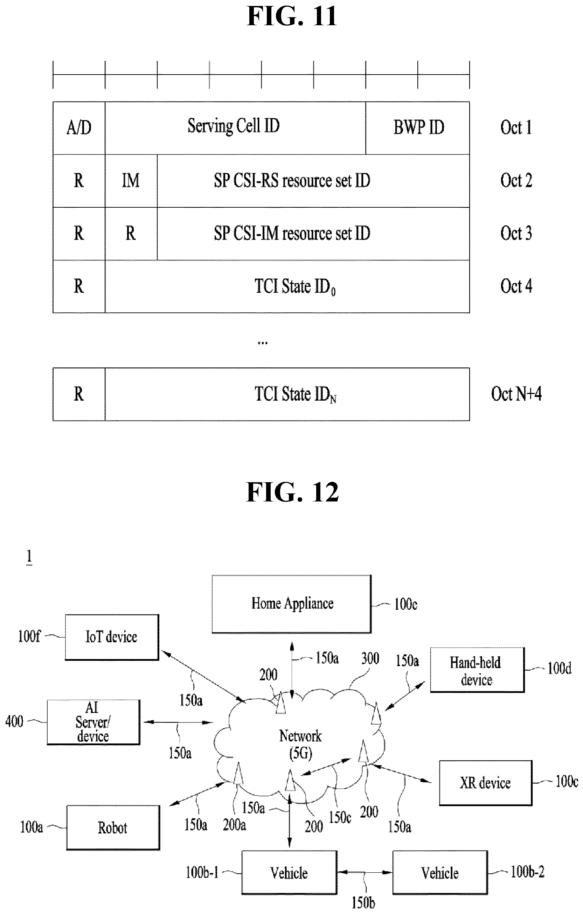

On the contrary, when Repetition is set to 'OFF', this is related to the Tx beam sweeping process of the BS. In the case where Repetition is set to 'OFF', the UE does not assume that signals in at least one CSI-RS resource within NZP-CSI-RS-ResourceSet are transmitted through the same DL spatial domain filter. That is, the signals in the at least one CSI-RS resource within NZP-CSI-RS-ResourceSet are transmitted on different Tx beams. FIG. 12 illustrates another exemplary DL BM procedure using a CSI-RS.

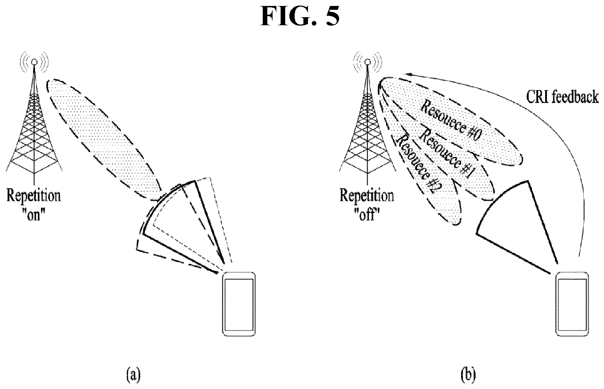

FIG. 5(a) illustrates an Rx beam refinement process of a UE, and FIG. 5(b) illustrates a Tx beam sweeping process of a BS. Further, FIG. 5(a) is for a case in which Repetition is set to 'ON', and FIG. 5(b) is for a case in which Repetition is set to 'OFF'.

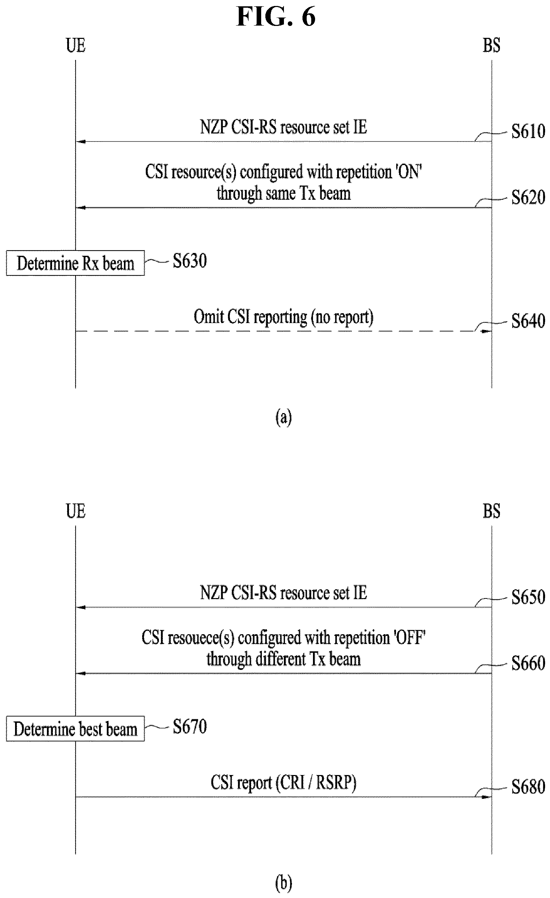

With reference to FIGS. 5(a) and 6(a), an Rx beam determination process of a UE will be described below.

FIG. 6(a) is a diagram illustrating a signal flow for an exemplary Rx beam determination process of a UE.

- The UE receives an NZP CSI-RS resource set IE including an RRC parameter 'Repetition' from a BS by RRC signaling (S610). The RRC parameter 'Repetition' is set to 'ON' herein.
- The UE repeatedly receives signals in resource(s) of a CSI-RS resource set for which the RRC parameter 'Repetition' is set to 'ON' on the same Tx beam (or DL spatial domain Tx filter) of the BS in different OFDM symbols (S620).
- The UE determines its Rx beam (S630).
- The UE skips CSI reporting (S640). That is, the UE may skip CSI reporting, when the RRC parameter 'Repetition' is set to 'ON'.

With reference to FIGS. 5(b) and 6(b), a Tx beam determination process of a BS will be described below.

FIG. 6(b) is a diagram illustrating an exemplary Tx beam determination process of a BS.

- A UE receives an NZP CSI-RS resource set IE including an RRC parameter 'Repetition' from the BS by RRC signaling (S650). When the RRC parameter 'Repetition' is set to 'OFF', this is related to a Tx beam sweeping process of the BS.
- The UE receives signals in resource(s) of a CSI-RS resource set for which the RRC parameter 'Repetition' is set to 'OFF' on different Tx beams (or DL spatial domain Tx filters) of the BS (S660).
- The UE selects (or determines) a best beam (S670).
- The UE reports the ID (e.g., CRI) of the selected beam and related quality information (e.g., an RSRP) to the BS (S680). That is, the UE reports a CRI and an RSRP corresponding to the CRI, when a CSI-RS is transmitted for BM.

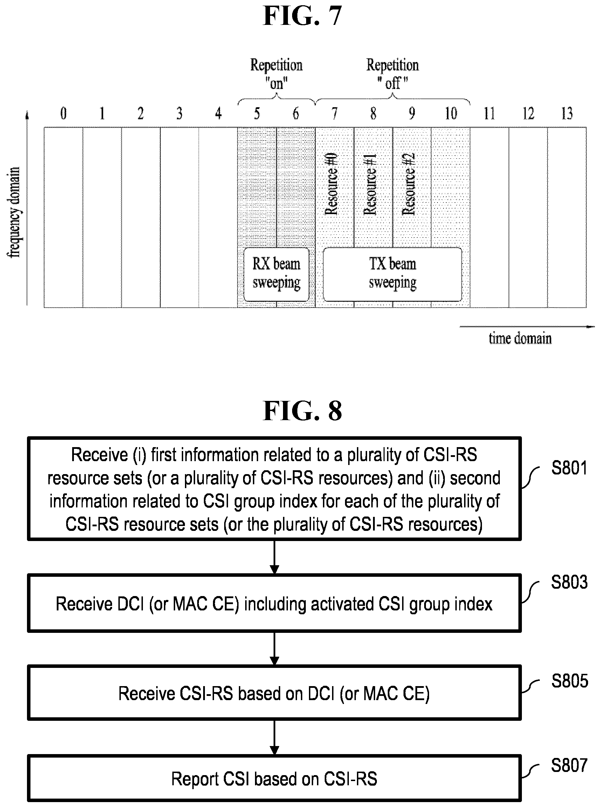

FIG. 7 is a diagram illustrating exemplary resource allocation in the time and frequency domains, which is related to the operation of FIG. 5.

When Repetition is set to 'ON' for a CSI-RS resource set, a plurality of CSI-RS resources may be repeatedly used on the same Tx beam, whereas when Repetition is set to 'OFF' for the CSI-RS resource set, different CSI-RS resources may be repeatedly transmitted on different Tx beams.

3. DL BM-Related Beam Indication

The UE may receive at least a list of up to M candidate transmission configuration indication (TCI) states for QCL indication by RRC signaling. M depends on a UE capability and may be 64.

Each TCI state may be configured with one RS set. Table 2 describes an example of a TCI-State IE. The TC-State IE is related to a QCL type corresponding to one or two DL RSs.

[Table 2]

```
-- ASN1START
-- TAG-TCI-STATE-START
TCI-State ::= SEQUENCE {
tci-StateId TCI-StateId,
qcl-Type1 QCL-Info,
qcl-Type2 QCL-Info OPTIONAL,   -- Need R
...
}
QCL-Info ::= SEQUENCE {
cell ServCellIndex OPTIONAL, -- Need R
bwp-Id BWP-Id       OPTIONAL, -- Cond CSI-RS-Indicated
referenceSignal CHOICE {
csi-rs NZP-CSI-RS-ResourceId,
ssb SSB-Index
},
qcl-Type ENUMERATED {typeA, typeB, typeC, typeD},
...
}
-- TAG-TCI-STATE-STOP
-- ASN1STOP
```

In Table 2, 'bwp-Id' identifies a DL BWP in which an RS is located, 'cell' indicates a carrier in which the RS is located, and 'referencesignal' indicates reference antenna port(s) serving as a QCL source for target antenna port(s) or an RS including the reference antenna port(s). The target antenna port(s) may be for a CSI-RS, PDCCH DMRS, or PDSCH DMRS.

4. Quasi-Co Location (QCL)

The UE may receive a list of up to M TCI-State configurations to decode a PDSCH according to a detected PDCCH carrying DCI intended for a given cell. M depends on a UE capability.

As described in Table 2, each TCI-State includes a parameter for establishing the QCL relationship between one or more DL RSs and a PDSCH DM-RS port. The QCL relationship is established with an RRC parameter qcl-Type1 for a first DL RS and an RRC parameter qcl-Type2 for a second DL RS (if configured).

The QCL type of each DL RS is given by a parameter 'qcl-Type' included in QCL-Info and may have one of the following values.

- 'QCL-TypeA': {Doppler shift, Doppler spread, average delay, delay spread}
- 'QCL-TypeB': {Doppler shift, Doppler spread}
- 'QCL-TypeC': {Doppler shift, average delay}
- 'QCL-TypeD': {Spatial Rx parameter}

For example, if a target antenna port is for a specific NZP CSI-RS, the NZP CSI-RS antenna port may be indicated/configured as QCLed with a specific TRS from the perspective of QCL-Type A and with a specific SSB from the perspective of QCL-Type D. Upon receipt of this indication/configuration, the UE may receive the NZP CSI-RS using a Doppler value and a delay value which are measured in a QCL-TypeA TRS, and apply an Rx beam used to receive a QCL-Type D SSB for reception of the NZP CSI-RS.

Energy saving of a BS is considered important in wireless communication systems including 3GPP, because it may contribute to building eco-friendly networks by reducing carbon emissions and reducing the operational expenditure (OPEX) of communication industry players. In particular, as the introduction of 5G communication requires high transmission rates, BSs should be equipped with more antennas and provide services in wider bandwidths and frequency bands. As a result, the energy cost of a BS has reached 20% of the total OPEX according to a recent study. Due to this increased interest in BS energy saving, a new study item called "study on network energy savings" was approved in 3GPP NR release 18. Specifically, the following enhancement techniques are under consideration in order to improve the energy saving capability of a BS from the perspective of transmission and reception.

- How to more efficiently apply one or more NES techniques in the time, frequency, spatial, and power domains based on UE assistance information and potential support/feedback from a UE, for a dynamic and/or semi-static operation and a finer granularity adaptation operation in transmission and reception -

For the purpose of NES, the BS may implement techniques such as controlling on/off for a predetermined duration on the time axis, controlling transmission/reception resources for a UE-common or UE-specific signal/channel, changing the amount of frequency resources, controlling transmission power, or turning antenna ports or TRPs on/off in the spatial domain. A state in which these techniques (defined as NES_techs, for convenience) are applied may be defined as an NES mode or an NES state.

The BS may indicate an applied NES_tech to the UE on an NES_tech basis or an NES_tech group basis (hereinafter, Approach 1), or preconfigure an NES_tech or NES_tech group corresponding to each code point of a specific indicator. The specific indicator may be indicated by DCI or a medium access control control element (MAC CE) or configured by higher layer signaling (hereinafter, Approach 2).

In Approach 1, when at least one NES_tech is applied, the UE may define a corresponding state as an NES mode or an NES state or define different NES modes or different NES states may be defined depending on which NES_techs are applied. In Approach 2, for example, when there is a 1-bit indicator, '0' may indicate no corresponding NES_tech and '1' may be linked to one or more NES_techs. When '1' is indicated by the 1-bit indicator, the UE may define the corresponding state as an NES mode or an NES state.

In another example, when there is a 2-bit indicator, '00' may indicate no corresponding NES_tech, '01' may be lined to at least one NES_tech_A, '10' may be linked to at least one NES_tech_B, and '11' may be linked to at least one NES_tech_C. When a code point other than '00' is indicated by the 2-bit indicator, the UE may define the corresponding state as an NES mode or an NES state. Further, when '01' is indicated by the 2-bit indicator, it may be defined as NES state #1, when '10' is indicated, it may be defined as NES state #2, and when '11' is indicated, it may be defined as NES state #3. In this manner, for each code point, it may be identified whether an NES state is indicated, or which NES state a current NES state is.

Particularly, the disclosure proposes a spatial domain BS energy saving method for DL communication.

In the disclosure, a scenario is mainly considered in which a BS obtains an NES gain by reducing the number of Tx antennas. For example, some Tx antenna elements of the BS may be turned off by turning on and off some antenna ports of a specific DL signal (e.g., CSI-RS) configured for a UE. As such, a power saving effect for the BS may be expected.

FIGS. 8 to 10 are diagrams illustrating an overall operation process of a UE and a BS according to the disclosure.

FIG. 8 is a diagram illustrating an overall operation process of a UE according to the disclosure.

Referring to FIG. 8, the UE may receive first information related to a plurality of CSI-RS resource sets or a plurality of CSI-RS resources and second information related to a CSI-RS group index for each of the plurality of CSI-RS resource sets or each of the plurality of CSI-RS resources (S801). Each CSI-RS group index may be associated with a different number of antenna ports. For example, a CSI-RS resource set or CSI-RS resource included in CSI-RS group index #0 may be associated with N1 antenna ports, and a CSI-RS resource set or CSI-RS resource included in CSI-RS group index #1 may be associated with N2 antenna ports.

The UE may receive downlink control information (DCI) and/or a medium access control control element (MAC CE) that activates at least one of configured CSI-RS group indexes (S803). For example, the UE may receive DCI that activates at least one CSI-RS group index through a group common-physical downlink control channel (GC-PDCCH).

The UE may receive a CSI-RS based on the received DCI and/or MAC CE (S805). For example, when the UE receives the DCI through the GC-PDCCH, the UE may separately receive DCI for triggering the CSI-RS. Further, for example, the CSI-RS group index and an indicator for triggering the CSI-RS may be included together in the received DCI.

The UE may measure CSI based on the received CSI-RS and report the CSI to a BS (S807).

A specific operation method of the UE according to FIG. 8 may be based on at least one of [Method #1] to [Method #5].

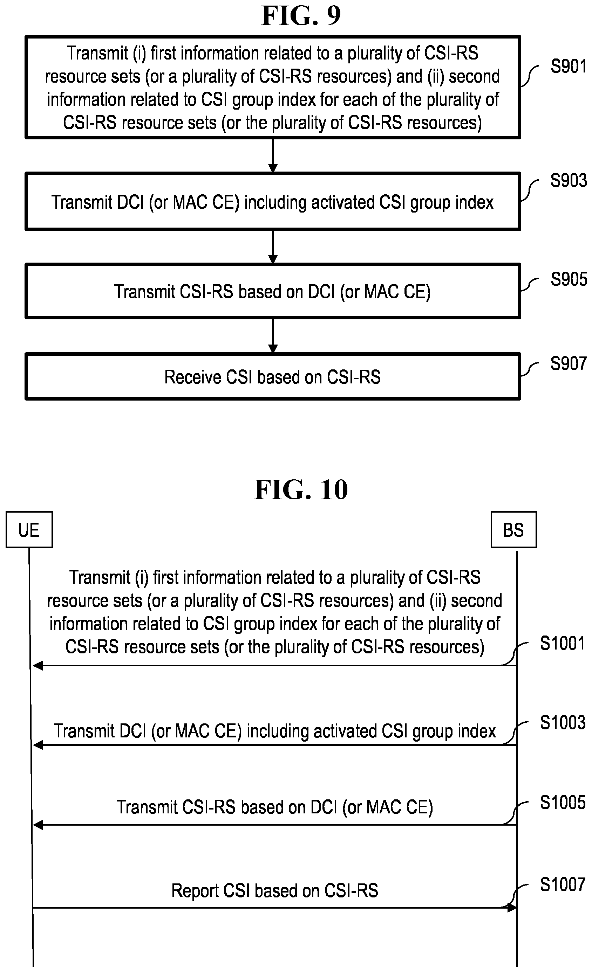

FIG. 9 illustrates an overall operation process of a BS according to the disclosure. Referring to FIG. 9, the BS may transmit first information related to a plurality of CSI-RS resource sets or a plurality of CSI-RS resources and second information related to a CSI-RS group index for each of the plurality of CSI-RS resource sets or each of the plurality of CSI-RS resources (S901). Each CSI-RS group index may be associated with a different number of antenna ports. For example, a CSI-RS resource set or CSI-RS resource included in CSI-RS group index #0 may be associated with N1 antenna ports, and a CSI-RS resource set or CSI-RS resource included in CSI-RS group index #1 may be associated with N2 antenna ports.

The BS may transmit DCI and/or a MAC CE that activates at least one of configured CSI-RS group indexes (S903). For example, the BS may transmit DCI that activates at least one CSI-RS group index through a GC-PDCCH.

The BS may transmit a CSI-RS based on the transmitted DCI and/or MAC CE (S905). For example, when the BS transmits the DCI through the GC-PDCCH, the BS may transmit DCI for triggering the CSI-RS separately. Further, for example, the CSI-RS group index and an indicator for triggering the CSI-RS may be included together in the DCI transmitted by the BS.

The BS may receive CSI measured based on the transmitted CSI-RS (S907).

A specific operation method of the BS according to FIG. 9 may be based on at least one of [Method #1] to [Method #5].

FIG. 10 illustrates an overall operation process of a network according to the disclosure.

Referring to FIG. 10, a BS may transmit, to a UE, first information related to a plurality of CSI-RS resource sets or a plurality of CSI-RS resources and second information related to a CSI-RS group index for each of the plurality of CSI-RS resource sets or the plurality of CSI-RS resources (S1001). Each CSI-RS group index may be associated with a different number of antenna ports. For example, a CSI-RS resource set or CSI-RS resource included in CSI-RS group index #0 may be associated with N1 antenna ports, and a CSI-RS resource set or CSI-RS resource included in CSI-RS group index #1 may be associated with N2 antenna ports.

The BS may transmit DCI and/or a MAC CE that activates at least one of configured CSI-RS group indexes to the UE (S1003). For example, the BS may transmit DCI that activates at least one CSI-RS group index through a GC-PDCCH.

The BS may transmit a CSI-RS to the UE based on the transmitted DCI and/or MAC CE (S1005). For example, when the BS transmits the DCI through the GC-PDCCH, the BS may transmit DCI for triggering the CSI-RS separately. Further, for example, the CSI-RS group index and an indicator for triggering the CSI-RS may be included together in the DCI transmitted by the BS.

The UE may measure CSI based on the received CSI-RS and report the CSI to the BS (S1007).

A specific operation method of the BS according to FIG. 10 may be based on at least one of [Method #1] to [Method #5].

[Method #1] Method of reducing power consumption of a BS by grouping NZP CSI-RS resources or NZP CSI-RS resource sets, and turning on only an NZP CSI-RS resource or NZP CSI-RS resource set included in a specific CSI group, while turning **off CSI-RS** resources or NZP CSI-RS resource sets included in the remaining CSI groups

In [Method #1], CSI grouping may be performed in various manners depending on a configuration based on which the grouping is performed.

(1) In a first method, a plurality of CSI-ReportConfigs may be configured, and a corresponding CSI group index may be configured for each CSI-ReportConfig. For example, CSI group index #0 may be configured for CSI-ReportConfigs with CSI-ReportConfigId values set to 0 or 1, and CSI group index #1 may be configured for CSI-ReportConfigs with CSI-ReportConfigId values set to 2 or 3.

When the BS indicates switching between CSI groups by signaling such as DCI or a MAC CE (e.g., indicates to turn off CSI group #0 and turn on CSI group #1), upon receipt of the corresponding indication, the UE may not receive CSI-RSs linked to CSI-ReportConfigs corresponding to CSI group #0 or may not perform CSI reportings linked to CSI-ReportConfigs corresponding to CSI group #0, whereas the UE may receive CSI-RSs linked to CSI-ReportConfigs corresponding to CSI group index #1 or perform CSI reportings linked to CSI-ReportConfigs corresponding to CSI group index #1.

The number N1 of antenna ports for CSI-RS linked to the CSI-ReportConfigs corresponding to CSI group index #0 may be different from the number N2 of antenna ports for CSI-RSs linked to the CSI-ReportConfigs corresponding to CSI group index #1. For example, when N1 > N2, the BS may reduce power consumption by performing no transmission through some antenna ports based on the indication to turn off CSI group #0 and turn on CSI group #1.

(2) However, the method of configuring a CSI group index for each CSI-ReportConfig as in (1) may increase radio resource control (RRC) signaling overhead, although it minimizes changes in the structures of existing RRC parameters.

In consideration of this, in a second method, one CSI-ReportConfig may be linked to a plurality of CSI-RS resource sets, and a CSI group index may be configured for each CSI-RS resource set. For example, two CSI-RS resource sets (e.g., CSI-ResourceConfigIds) for channel measurement (e.g., resourcesForChannelMeasurement) may be preconfigured in one CSI-ReportConfig for the UE, CSI group index #0 may be configured for one CSI-RS resource set, and CSI group index #1 may be configured for the other CSI-RS resource set.

When the BS indicates switching between CSI groups by signaling such as DCI or a MAC CE (e.g., indicates to turn off CSI group #0 and turn on CSI group #1), upon receipt of the corresponding indication, the UE may not receive CSI-RSs linked to the CSI-RS resource set corresponding to CSI group #0 or may not perform CSI reportings linked to the CSI-RS resource set corresponding to CSI group #0, whereas the UE may receive CSI-RSs linked to the CSI-RS resource set corresponding to CSI group index #1 or perform CSI reporting linked to the CSI-RS resource set corresponding to CSI group index #1.

The number N1 of antenna ports for CSI-RS resources linked to the CSI-RS resource set corresponding to CSI group index #0 may be different from the number N2 of antenna ports for CSI-RS resources linked to the CSI-RS resource set corresponding to CSI group index #1.

For example, when N1 > N2, the BS may reduce power consumption by performing no transmission through some antenna ports based on the indication to turn off CSI group #0 and turn on CSI group #1.

In this case, since N1 and N2 may be different, a CodebookConfig needs to be configured separately for each CSI group according to the number of antenna ports. That is, the BS may separately preconfigure a CodebookConfig (e.g., codebook subset restriction information) linked to the CSI-RS resource set corresponding to CSI group index #0 and a CodebookConfig (e.g., codebook subset restriction information) linked to the CSI-RS resource set corresponding to CSI group index #1 in a corresponding CSI-ReportConfig. Specifically, in the disclosure, for a type I single panel codebook, codebook restriction may be configured by bitmap parameters such as twoTX-CodebookSubsetRestriction, typeI-SinglePanel-riRestriction, n1-n2, and typeI-SinglePanel-codebookSubsetRestriction-i2. Further, for a type I multi-panel codebook, codebook restriction may be configured by bitmap parameters such as ng-n1-n2 and ri-Restriction. Further, for a type II codebook, codebook restriction may be configured by bitmap parameters such as n1-n2-codebookSubsetRestriction, typeII-RIRestriction, n1-n2, and typeI-SinglePanel-codebookSubsetRestriction-i2, and/or parameters such as typeII-PortSelection, phaseAlphabetSize, subbandAmplitude, and numberOfBeams.

When CSI group index #0 is turned on and thus the UE performs CSI reporting corresponding to the corresponding CSI group, the UE may use CodebookConfig configuration information (e.g., codebook subset restriction information) corresponding to CSI group index #0. On the other hand, when CSI group index #1 is turned on and thus the UE performs CSI reporting corresponding to the corresponding CSI group, the UE may use CodebookConfig configuration information (e.g., codebook subset restriction information) corresponding to CSI group index #1.

(3) In a third method, CSI group indexes may be configured for a plurality of CSI-RS resources included in a CSI-RS resource set configured in one CSI-ReportConfig. For example, when a plurality of CSI-RS resources included in one CSI-RS resource set (e.g., CSI-ResourceConfigId) configured for channel measurement (e.g., resourcesForChannel-Measurement) in one CSI-ReportConfig are configured for the UE, CSI group index #0 may be configured for some of the CSI-RS resources, and CSI group index #1 may be configured for the remaining CSI-RS resources.

When the BS indicates switching between CSI groups by signaling such as DCI or a MAC CE (e.g., indicates to turn off CSI group #0 and turn on CSI group #1) upon receipt of the corresponding indication, the UE may not receive the CSI-RS resources corresponding to CSI group #0 or may not perform CSI reporting corresponding to CSI group #0, whereas the UE may receive the CSI-RS resources corresponding to CSI group index #1 or perform CSI reporting corresponding to CSI group index #1. The number N1 of antenna ports for the CSI-RS resources corresponding to CSI group index #0 may be different from the number N2 of antenna ports for the CSI-RS resources corresponding to CSI group index #1. For example, when N1 > N2, the BS may reduce power consumption by performing no transmission through some antenna ports based on the indication to turn off CSI group #0 and turn on CSI group #1.

In this case, since N1 and N2 may be different, a CodebookConfig needs to be configured separately for each CSI group according to the number of antenna ports. That is, the BS may separately preconfigure a CodebookConfig (e.g., codebook subset restriction information) linked to the CSI-RS resources corresponding to CSI group index #0 and a CodebookConfig (e.g., codebook subset restriction information) linked to the CSI-RS resources corresponding to CSI group index #1 in the CSI-ReportConfig.

When CSI group index #0 is turned on and thus the UE performs CSI reporting for the corresponding CSI group, the UE may use CodebookConfig configuration information (e.g., codebook subset restriction information) corresponding to CSI group index #0. On the other hand, when CSI group index #1 is turned on and thus the UE performs CSI reporting for the corresponding CSI group, the UE may use CodebookConfig configuration information (e.g., codebook subset restriction information) corresponding to CSI group index #1.

(4) In a fourth method, a plurality of CodebookConfigs may be configured in one CSI-ReportConfig. That is, the BS may provide CodebookConfig configuration #1 (e.g., RI restriction for N1 or less or codebook subset restriction corresponding to a codebook that is valid only for N1 or fewer ports) for N1 antenna ports and CodebookConfig configuration #2 (e.g., RI restriction for N2 or less or codebook subset restriction corresponding to a codebook that is valid only for N2 or fewer ports) for N2 antenna ports, in a corresponding CSI-ReportConfig. When the BS indicates switching between CodebookConfig configurations (e.g., instructs to turn off CodebookConfig configuration #1 and turn on CodebookConfig configuration #2) by signaling such as DCI or a MAC CE, upon receipt of the indication, the UE may perform CSI reporting corresponding to CodebookConfig configuration #2. Characteristically, N1 and N2 may be different, and for example, when N1 > N2, the BS may reduce power consumption by performing no transmission through some antenna port(s) based on the indication to turn off CodebookConfig configuration #1 and turn on CodebookConfig configuration #2.

It has been described that the number of antenna ports is different between CSI group indexes in the above methods, by way of example. However, other parameters may also be different between CSI group indexes. For example, the power value of an NZP CSI-RS (e.g., a power offset from an SSB, configured by a parameter powerControlOffsetSS) may be configured differently according to a CSI group index. For example, CSI-RS resource #1 corresponding to CSI group index #1 may have a power value which is X1 dB less or larger than CSI-RS resource #0 corresponding to CSI group index #0. Alternatively, CSI-RS resource #1 corresponding to CSI group index #1 may have a power value which is X2 dB less or larger than CSI-RS resource #0 corresponding to CSI group index #0, and may have Y fewer or more antenna ports than CSI-RS resource #0.

When it is said that the power value is different according to a CSI group index, this may mean that the number of antenna port elements connected to an antenna port or the number of active ones of connected antenna port elements is different. That is, even if the number of antenna ports is equal for CSI group #0 and CSI group #1, when the number of antenna port elements connected to the antenna ports corresponding to CSI group #0 and the number of antenna port elements connected to the antenna ports corresponding to CSI group #1 or the numbers of active ones of the connected antenna port elements are different, the power values may be different. For example, when the number of antenna port elements activated in the antenna ports corresponding to CSI group #0 is less than the number of antenna port elements activated in the antenna ports corresponding to CSI group #1, the amount of power of a CSI-RS included in CSI group #0 may be less than the amount of power of a CSI-RS included in CSI group #1, on the assumption of the same power amount for each antenna port element.

Although the above-described methods are based on the assumption of an explicit indication of switching between CSI groups or between CSI configurations from the BS, the switching may be implicitly indicated by a separate indicator indicating the initiation of an energy saving operation or NES or NES mode of the BS (e.g., time-domain on/off and/or a change in the amount of frequency resources and/or power increase/decrease and/or antenna port on/off and/or TRP on/off in the spatial domain).

Alternatively, when the NES state is indicated as described above, switching between CSI groups or between CSI configurations may be applied, or a CSI group or CSI configuration to be applied may be determined according to the NES state. Alternatively, the UE may select an appropriate CSI group or CSI configuration according to a situation and perform corresponding CSI reporting. For example, the UE may select one CSI group index advantageous for efficient data transmission by comparing RI/PMI/CQI/SINR information corresponding to CSI group index #0 with RI/PMI/CQI/SINR information corresponding to CSI group index #1, and perform CSI reporting corresponding to the selected CSI group index. Information regarding to which CSI group index the CSI corresponds may also be included in the CSI report. When the amount of CSI to be fed back is allowed to be different depending on a CSI group index, information regarding the CSI group index may be preferably included in CSI part 1. Since CSI part 1 has a fixed payload size, the BS may identify the size of CSI payload included in CSI part 2 from the information regarding the CSI group index included in CSI part 1. The CSI payload included in CSI part 2 may be fed back by the UE.

According to a BS configuration or a predefined rule, the UE may feed back CSI corresponding to one or more CSI group indexes. For example, when a plurality of CSI group indexes are configured for a specific CSI-ReportConfig, the UE may feed back a CSI report corresponding to all of the CSI group indexes or a plurality of CSI group indexes. Specifically, the UE may report CSI corresponding to best N CSI group indexes based on specific CSI (e.g., RI/LI/CRI/PMI/CQI) to the BS. A specific N value may be predefined or set/indicated by the BS. Further, when the amount of CSI to be fed back is allowed to be different according to a CSI group index, information about a CSI group index corresponding to actual CSI to be fed back may be preferably included in CSI part 1. Since CSI part 1 has a fixed payload size, the BS may identify the size of CSI payload included in CSI part 2 from the information about the CSI group index in CSI part 1. The CSI payload included in CSI part 2 may be one that has been fed back by the UE.

Additionally, to reduce feedback overhead, CSI (e.g., RI/LI/CRI/PMI/CQI) corresponding to a specific CSI group index may be fully reported, while CSI corresponding to the remaining CSI group indexes may be reported as offset values from the "CSI corresponding to the specific CSI group index." The specific CSI group index may be predefined (e.g., as a lowest or highest CSI group index), or the BS may configure/indicate a specific value by higher layer signaling or L1/L2 signaling such as DCI/a MAC-CE. Alternatively, the UE may select a specific CSI group index and report it together with CSI. Alternatively, the UE may select a CSI group index with best or worst CSI as the specific CSI group index, report the CSI with the specific CSI group index, and report CSI corresponding to the remaining CSI group indexes as offset values from the "CSI corresponding to the specific CSI group index."

As an additional impact of turn-on of a specific CSI-RS resource set, an impact on the interpretation of a CSI request field may also be considered. For example, the interpretation of each code point of the CSI request field (e.g., each bit value of the CSI request field) may be preconfigured to be different for each CSI-RS resource set, and the UE may interpret the CSI request field according to an actual activated CSI-RS resource set. When DCI indicating switching between CSI groups is received through a GC-PDCCH, the CSI request field may be received in DCI separate from the DCI indicating switching between CSI groups. When the DCI indicating switching between CSI groups is received through a UE-specific PDCCH, the CSI request field may be received in the same DCI as the DCI indicating switching between CSI groups or in separate DCI.

In the above methods, the DCI or MAC CE indicating switching between CSI groups or CSI configuration indexes may be transmitted UE-specifically, UE group-commonly, or cell-specifically. In the case of the DCI, it may be transmitted scrambled with a UE-specifically, UE group-commonly, or cell-specifically configured RNTI. In the case of the MAC CE, it may be transmitted through a PDSCH scheduled by DCI scrambled with the UE-specifically, UE group-commonly, or cell-specifically configured RNTI (the PDSCH may also be scrambled with the UE-specifically, UE group-commonly, or cell-specifically configured RNTI).

Further, a bit location in the MAC CE, which indicates switching between CSI groups or CSI configuration indexes, may be preconfigured.

A carrier/serving cell carrying the DCI or MAC CE may be different from a carrier/serving cell in which CSI group switching is performed, and switching between CSI groups for a plurality of carriers/serving cells may be indicated by the DCI or MAC CE. Switching to a common CSI group index or CSI configuration index may be indicated for a plurality of carriers/serving cells, or switching to a different CSI group index or CSI configuration index may be indicated for each carrier/serving cell.

Further, the UE may perform the indicated CSI group/configuration switching operation after a predetermined time of an application delay from the reception of the DCI or MAC CE indicating switching between CSI groups or CSI configuration indexes. For example, the UE may perform the indicated CSI group/configuration switching operation from a time point that is K1 symbols/slots/msec after a reception time of the DCI or MAC CE, where K1 is predefined/preconfigured or reported by UE capability signaling, or from a slot or slot-group boundary closest to the time point that is K1 symbols/slots/msec after the reception time of the DCI or MAC CE.

In another example, the UE may perform the indicated CSI group/configuration switching operation from a time point that is K1 symbols/slots/msec after a transmission time of an HARQ-ACK feedback corresponding to the received DCI or MAC CE, where K1 is predefined/preconfigured or reported by UE capability signaling, or from a slot or slot-group boundary closest to the time point that is K1 symbols/slots/msec after the transmission time of the HARQ-ACK feedback.

A timer value for the CSI group/configuration switching operation may be preconfigured/predefined. When the UE starts a timer from a reception time of an indication to turn on CSI group index n (e.g., n=1) and turn off CSI group index m (e.g., m=0) or from a time when it performs CSI group/configuration switching, and then the timer value expires, the UE may perform an operation of turning off CSI group index n and turning on CSI group index m, even if it does not receive a CSI group/configuration switching indication by DCI or a MAC CE.

When a CSI-ReportConfig, CSI-RS resource set, or CSI-RS resource corresponding to specific CSI group index k or specific CSI configuration index k is not configured, but an indication to turn on CSI group index k or CSI configuration index k is received by DCI or a MAC CE, the UE may not receive a CSI-RS or perform CSI reporting for a specific time period or until an indication to turn on another CSI group index k or another CSI configuration index k is received.

In the above methods, a UE operation for a CSI-RS corresponding to a CSI group index for which switch-off is indicated may vary depending on the type (e.g., periodic, semi-persistent, or aperiodic) of the CSI-RS. For example, for a CSI-RS configured with periodic CSI reporting, the UE may not receive the CSI-RS and perform the corresponding periodic CSI reporting (through a PUCCH). In another example, for a CSI-RS configured with semi-persistent CSI reporting, the UE may not receive the (activated) CSI-RS and perform the corresponding semi-persistent CSI reporting (through a PUSCH or PUCCH), and may not expect activation of the CSI-RS or may ignore activation even if it is indicated. In another example, for a CSI-RS configured with aperiodic CSI reporting, the UE may not expect to receive a UL grant indicating CSI reporting for the CSI-RS, may ignore the UL grant itself if received, may consider only a CSI request corresponding to the CSI-RS as invalid, or may omit only the CSI reporting corresponding to the CSI-RS.

The above method may be applied to all or only some of the following different types of CSI-RSs. Alternatively, CSI group index n or CSI configuration index n and CSI group index m or CSI configuration index m may be configured for different types of CSI-RSs. For example, CSI group index n or CSI configuration index n linked to a CSI-RS resource or CSI-RS resource set configured with periodic CSI reporting and CSI group index m or CSI configuration index m linked to a CSI-RS resource or CSI-RS resource set configured with semi-persistent CSI reporting may be configured for different types of CSI-RSs.

Further, although it has been described in the above methods that CSI switching is performed by configuring only two CSI group indexes or two CSI configuration indexes, the disclosure is not limited thereto, and the method may be extended to a method of switching between CSI groups/configurations by configuring three or more CSI group indexes or three or more CSI configuration indexes. In a method, when aperiodic CSI reporting linked to CSI group index n is triggered, periodic CSI reporting linked to CSI group index m may not be performed. Alternatively, when semi-persistent CSI reporting linked to CSI group index n is activated, semi-persistent CSI reporting linked to CSI group index m may be deactivated.

The different types of CSI-RSs are as follows:

- Periodic CSI-RS
- Semi-persistent CSI-RS
- Aperiodic CSI-RS
- CSI-RS configured with periodic CSI reporting
- CSI-RS configured with semi-persistent CSI reporting
- CSI-RS configured with aperiodic CSI reporting

The above method may be linked to a DRX configuration. For example, in the case where a CSI-ReportConfig, a CSI-RS resource, a CSI-RS resource set, a CSI-RS group index, or a CSI configuration index is configured for each DRX under a plurality of DRX configurations (e.g., DRX configuration #1 and DRX configuration #2), and then a specific DRX configuration is activated, the UE may receive a CSI-RS resource or CSI-RS resource set linked to the DRX configuration and perform only linked CSI reporting.

Alternatively, even for one DRX configuration, a CSI-ReportConfig, a CSI-RS resource, a CSI-RS resource set, a CSI-RS group index, or a CSI configuration index may also be applied depending on whether it is a DRX active time (e.g., a time period during which an onDurationtimer and/or inacitivitytimer is running, or a time during which the UE should be awake for transmission and/or reception). That is, in the DRX active time (or outside the DRX active time), the UE may receive a linked CSI-RS resource or CSI-RS resource set and perform only linked CSI reporting. For example, in the DRX active time, the UE may receive a CSI-RS resource or CSI-RS resource set linked to the DRX active time and perform only linked CSI reporting. Conversely, outside the DRX active time, the UE may receive a CSI-RS resource or CSI-RS resource set linked to a corresponding DRX inactive time and perform only linked CSI reporting.

The above method may be linked to BWP switching. For example, in the case where a CSI-ReportConfig, a CSI-RS resource, a CSI-RS resource set, a CSI-RS group index, or a CSI configuration index is configured for each BWP under a plurality of BWP configurations (e.g., BWP #1 and BWP #2), and then a specific BWP configuration is activated or switching to a specific BWP is performed, the UE may receive a CSI-RS resource or CSI-RS resource set linked to the BWP configuration and perform only CSI reporting linked to the BWP configuration.

In turning on and off a specific CSI-ReportConfig, CSI-RS resource, or CSI-RS resource set as in the above proposed method, an operation of linking the operation to an SRS resource or an SRS resource set may also be considered. For example, an SRS resource or SRS resource set and a specific CSI-ReportConfig, CSI-RS resource, or CSI-RS resource set may be linked to each CSI group index or CSI configuration index, and when a specific CSI group index or CSI configuration index is turned on/off, an SRS resource or SRS resource set and a CSI-ReportConfig, CSI-RS resource, or CSI-RS resource set which are configured with the CSI group index or CSI configuration index or associated with each other may be turned on or off at once. Being associated may mean that an association has been preconfigured/predefined separately, a QCL source-target relationship has been established, or an RS for spatial relation information has been configured, and a correspondence relationship between antenna ports or panels/pols may also be preconfigured/predefined.

[Method #2] Method of reducing power consumption of a BS by using a deactivation and activation mechanism

[Table 3]

| |
|---|
| 5.2.1.5.2    Semi-persistent CSI/Semi-persistent CSI-RS<br>For semi-persistent reporting on PUSCH, a set of trigger states are higher layer configured by CSI-SemiPersistentOnPUSCH-TriggerStateList, where the CSI request |

field in DCI scrambled with SP-CSI-RNTI activates one of the trigger states. A UE is not expected to receive a DCI scrambled with SP-CSI-RNTI activating one semi-persistent CSI report with the same CSI-ReportConfigId as in a semi-persistent CSI report which is activated by a previously received DCI scrambled with SP-CSI-RNTI.

For semi-persistent reporting on PUCCH, the PUCCH resource used for transmitting the CSI report are configured by reportConfigType. Semi-persistent reporting on PUCCH is activated by an activation command as described in clause 6.1.3.16 of [10, TS 38.321], which selects one of the semi-persistent Reporting Settings for use by the UE on the PUCCH. When the UE would transmit a PUCCH with HARQ-ACK information in slot n corresponding to the PDSCH carrying the activation command, the indicated semi-persistent Reporting Setting should be applied starting from the first slot that is after slot $n + 3N_{slot}^{subframe,\mu}$ where · is the SCS configuration for the PUCCH.

For a UE configured with CSI resource setting(s) where the higher layer parameter resourceType set to 'semiPersistent'.

-    when a UE receives an activation command, as described in clause 6.1.3.12 of [10, TS 38.321], for CSI-RS resource set(s) for channel measurement and CSI-IM/NZP CSI-RS resource set(s) for interference measurement associated with configured CSI resource setting(s), and when the UE would transmit a PUCCH with HARQ-ACK information in slot n corresponding to the PDSCH carrying the selection command, the corresponding actions in [10, TS 38.321] and the UE assumptions (including QCL assumptions provided by a list of reference to TCI-State's, one per activated resource) on CSI-RS/CSI-IM transmission corresponding to the configured CSI-RS/CSI-IM resource configuration(s) shall be applied starting from the first slot that is after slot $n + 3N_{slot}^{subframe,\mu} + \frac{2^{\mu}}{2^{\mu_{Kmac}}} \cdot k_{\mathrm{mac}}$ where · is the SCS configuration for the PUCCH and $\mu_{K_{mac}}$ is the subcarrier spacing configuration for $k_{mac}$ with a value of 0 for frequency range 1, and $k_{\mathrm{mac}}$ is provided by K-Mac or $k_{\mathrm{mac}} = 0$ if K-Mac is not provided. If a TCI-State referred to in the list is configured with a reference to an RS configured with qcl-Type set to 'typeD', that RS can be an SS/PBCH block, periodic or semi-persistent CSI-RS located in same or different CC/DL BWP.

-    when a UE receives a deactivation command, as described in clause 6.1.3.12 of [10, TS 38.321], for activated CSI-RS/CSI-IM resource set(s) associated with configured CSI resource setting(s), and when the UE would transmit a PUCCH with HARQ-ACK information in slot n corresponding to the PDSCH carrying the deactivation command, the corresponding actions in [10, TS 38.321] and UE assumption on cessation of CSI-RS/CSI-IM transmission corresponding to the deactivated CSI-RS/CSI-IM resource set(s) shall apply starting from the first slot that is after slot $n + 3N_{slot}^{subframe,\mu} + \frac{2^{\mu}}{2^{\mu_{Kmac}}} \cdot k_{\mathrm{mac}}$ where · is the SCS configuration for the PUCCH and

$\mu_{K_{mac}}$ is the subcarrier spacing configuration for $k_{mac}$ with a value of 0 for frequency range 1, and $k_{\mathrm{mac}}$ is provided by K-Mac or $k_{\mathrm{mac}} = 0$ if K-Mac is not provided.

A codepoint of the CSI request field in the DCI is mapped to a SP-CSI triggering state according to the order of the positions of the configured trigger states in CSI-SemiPersistentOnPUSCH-TriggerStateList, with codepoint '0' mapped to the triggering state in the first position. A UE validates, for semi-persistent CSI activation or release, a PDCCH on a DCI only if the following conditions are met:

- the CRC parity bits of the DCI format are scrambled with a SP-CSI-RNTI provided by higher layer parameter sp-CSI-RNTI

- Special fields for the DCI format are set according to Table 5.2.1.5.2-1 or Table 5.2.1.5.2-2.

If validation is achieved, the UE considers the information in the DCI format as a valid activation or valid release of semi-persistent CSI transmission on PUSCH, and the UE activates or deactivates a CSI Reporting Setting indicated by CSI request field in the DCI. If validation is not achieved, the UE considers the DCI format as having been detected with a non-matching CRC.

Table 5.2.1.5.2-1: Special fields for semi-persistent CSI activation PDCCH validation

|  | DCI format 0_1/0_2 |
|---|---|
| HARQ process number | set to all '0's |
| Redundancy version | set to all '0's |

Table 5.2.1.5.2-2: Special fields for semi-persistent CSI deactivation PDCCH validation

|  | DCI format 0_1/0_2 |
|---|---|
| HARQ process number | set to all '0's |
| Modulation and coding scheme | set to all '1's |
| Resource block assignment | If higher layer configures RA type 0 only, set to all '0's; If higher layer configures RA type 1 only, set to all '1's; If higher layer configures dynamic switch between RA type 0 and 1, then if MSB is'0', set to all '0's; else, set to all '1's For DCI 0_1, if higher layer configures RA type 2, set to all '1's if $\mu = 0$; set to all '0's if $\mu = 1$ |
| Redundancy version | set to all '0's |

> If the UE has an active semi-persistent CSI-RS/CSI-IM resource configuration, or an active semi-persistent ZP CSI-RS resource set configuration, and has not received a deactivation command, the activated semi-persistent CSI-RS/CSI-IM resource set or the activated semi-persistent ZP CSI-RS resource set configurations are considered to be active when the corresponding DL BWP is active, otherwise they are considered suspended.
>
> If the UE is configured with carrier deactivation, the following configurations in the carrier in activated state would also be deactivated and need re-activation configuration(s): semi-persistent CSI-RS/CSI- IM resource, semi-persistent CSI reporting on PUCCH, semi-persistent SRS, semi-persistent ZP CSI-RS resource set.

Table 3 is an excerpt from 3GPP TS 38.214 v17.1.0 clause 5.2.1.5.2.

As illustrated in Table 3, in the current NR system, a semi-persistent (SP) CSI report may be transmitted through a physical uplink control channel (PUCCH) or physical uplink shared channel (PUSCH). SP CSI reporting on PUSCH may be deactivated or activated by one DCI scrambled with an SP-CSI-RNTI, and one CSI-ReportConfig to be deactivated or activated may be indicated by a code point of the CSI request field. Further, activation or deactivation for SP CSI reporting on PUSCH may be indicated by a MAC CE.

Table 4 below and FIG. 11 are excerpts from 3GPP TS 38.321 v16.7.0 clause 6.1.3.13, and are intended to describe the structure of a MAC CE for deactivating or activating an SP CSI-RS resource set.

Table 4]

> 6.1.3.12 SP CSI-RS/CSI-IM Resource Set Activation/Deactivation MAC CE
>
> The SP CSI-RS/CSI-IM Resource Set Activation/Deactivation MAC CE is identified by a MAC subheader with LCID as specified in Table 6.2.1-1. It has a variable size and consists of the following fields:
>
> - A/D: This field indicates whether to activate or deactivate indicated SP CSI-RS and CSI-IM resource set(s). The field is set to 1 to indicate activation, otherwise it indicates deactivation;
>
> - Serving Cell ID: This field indicates the identity of the Serving Cell for which the MAC CE applies. The length of the field is 5 bits;
>
> - BWP ID: This field indicates a DL BWP for which the MAC CE applies as the codepoint of the DCI bandwidth part indicator field as specified in TS 38.212 [9]. The length of the BWP ID field is 2 bits;
>
> - SP CSI-RS resource set ID: This field contains an index of NZP-CSI-RS-ResourceSet containing Semi Persistent NZP CSI-RS resources, as specified in TS 38.331 [5], indicating the Semi Persistent NZP CSI-RS resource set, which shall be activated or deactivated. The length of the field is 6 bits;
>
> - IM: This field indicates the presence of the octet containing SP CSI-IM resource set ID field. If the IM field is set to 1, the octet containing SP CSI-IM resource set ID field is present. If IM field is set to 0, the octet containing SP CSI-IM resource set ID field is not present;
>
> - SP CSI-IM resource set ID: This field contains an index of CSI-IM-ResourceSet containing Semi Persistent CSI-IM resources, as specified in TS 38.331 [5], indicating the Semi Persistent CSI-IM resource set, which shall be activated or deactivated. The length of the field is 6 bits;
>
> - TCI State IDi: This field contains TCI-StateId, as specified in TS 38.331 [5], of a TCI State, which is used as QCL source for the resource within the Semi Persistent NZP CSI-RS resource set indicated by SP CSI-RS resource set ID field. TCI State ID0 indicates TCI State for the first resource within the set, TCI State ID1 for the second one and so on. The length of the field is 7 bits. If the A/D field is set to 0, the octets containing TCI State ID field(s) are not present;
>
> - R: Reserved bit, set to 0.

According to [Method #2], for example, deactivating a CSI-ReportConfig or CSI-RS resource set linked to CSI-RS resources configured with N1 antenna ports and activating a CSI-ReportConfig or CSI-RS resource set linked to CSI-RS resources configured with other N2 (< N1) antenna ports may be useful in terms of BS power saving.

The current mechanism may be inefficient because it requires transmitting a MAC CE for deactivation and a MAC CE for activation to deactivate the N1 antenna ports and activate the N2 antenna ports, respectively. Therefore, the disclosure proposes a more efficient deactivation/activation mechanism.

At least one of the following methods is applied to SP CSI reporting on PUSCH or PUCCH, so that CSI-ReportConfig index #n or CSI-RS resource set index #n may be deactivated and another CSI-ReportConfig index #m or CSI-RS resource set index #m may be activated by one DCI or MAC CE.

- CSI-ReportConfig index #n and CSI-ReportConfig index #m may be individually indicated by separate fields in the DCI or MAC CE. For example, when CSI-ReportConfig index #n is indicated in field #1 (e.g., MCS) in the DCI and CSI-ReportConfig index #m is indicated in field #2 (e.g., CSI request) in the DCI, the UE may consider that CSI-ReportConfig index #n is deactivated and CSI-ReportConfig index #m is activated.
- Linkage between CSI-ReportConfig index #n and CSI-ReportConfig index #m may be preconfigured, so that when one is activated or deactivated, the other one may be configured to be automatically deactivated or activated. For example, when deactivation is indicated for CSI-ReportConfig index #n by DCI or a MAC CE, the UE may consider that CSI-ReportConfig index #m is automatically activated. In another example, when activation is indicated for CSI-ReportConfig index #n by DCI or a MAC CE, the UE may consider that CSI-ReportConfig index #m, which has been already activated (and/or is being activated), is automatically deactivated. The linkage may be extended to one-to-many, many-to-one, or many-to-many mapping, not just one-to-one mapping. For example, in the case of many-to-many mapping, linkage between CSI-ReportConfig indexes #n1/n2/n3 and CSI-ReportConfig indexes #m1/m2/m3 may be preconfigured. When one of CSI-ReportConfig indexes #n1/n2/n3 is activated or deactivated, the UE may consider that the corresponding CSI-ReportConfig indexes #m1/m2/m3 may be automatically deactivated.
- For one of a plurality of code points corresponding to one field in DCI or a MAC CE, at least one CSI-ReportConfig to be activated and at least one CSI-ReportConfig to be deactivated may be configured. For example, when CSI-ReportConfig index #n to be activated and CSI-ReportConfig index #m to be deactivated are preconfigured for a specific code point of the CSI request field in DCI and the code point is indicated, the UE may consider that CSI-ReportConfig index #n is deactivated and CSI-ReportConfig index #m is activated.
- For specific CSI-ReportConfig index #n, it may be configured that when a corresponding CSI-ReportConfig is activated or deactivated, all other CSI-ReportConfigs that have been activated (and/or are being activated) are automatically deactivated or activated. For example, when activation is indicated for CSI-ReportConfig index #n by DCI or a MAC CE, the UE may assume that all other CSI-ReportConfigs that have been activated (and/or are being activated) are automatically deactivated.
- A separate 1-bit flag in the DCI or MAC CE may indicate whether to apply the existing activation/deactivation operation or the proposed new operation.
- In the above proposed methods, CSI-ReportConfig may be replaced with CSI-RS resource set or CSI-RS resource. In the case of CSI-RS resource set, a plurality of CSI-RS resource sets may be configured in one CSI-ReportConfig, as in the structure proposed in [Method #1]. Alternatively, in the case of CSI-RS resource, a plurality of CSI-RS resources may be configured in a specific CSI-RS resource set configured in one CSI-ReportConfig, as in the structure proposed in [Method #1].

In the above methods, the DCI or MAC CE indicating activation and/or deactivation may be transmitted UE-specifically, UE group-commonly, or cell-specifically. In the case of the DCI, it may be transmitted scrambled with a UE-specifically, UE group-commonly, or cell-specifically configured RNTI. In the case of the MAC CE, it may be transmitted through a PDSCH scheduled by DCI scrambled with the UE-specifically, UE group-commonly, or cell-specifically configured RNTI (the PDSCH may also be scrambled with the UE-specifically, UE group-commonly, or cell-specifically configured RNTI).

Further, a bit location in the MAC CE may be preconfigured, which indicates activation and/or deactivation. A carrier/serving cell carrying the DCI or MAC CE may be different from a carrier/serving cell to which activation and/or deactivation is applied, and activation and/or deactivation for a plurality of carriers/serving cells may be indicated by the DCI or MAC CE. For example, activation and/or deactivation of a common configuration index may be indicated for a plurality of carriers/serving cells, or activation and/or deactivation of a different configuration index may be indicated for each carrier/serving cell.

According to the existing NR operation for SP CSI reporting through a PUCCH, when BWP switching is performed from BWP#1 to BWP#2, an SP CSI reporting configuration activated in BWP#1 may be suspended, and when the UE switches back from BWP#n (n is an integer other than 1) to BWP#1, the suspended SP CSI reporting configuration may be automatically activated without an additional activation process.

(If the UE is in an active semi-persistent CSI reporting configuration on PUCCH and has not received a deactivation command, the CSI reporting takes place when the BWP in which the reporting is configured to take place is the active BWP, otherwise the CSI reporting is suspended.)

However, from the perspective of power saving of the BS, it may not be desirable for the BS to transmit a CSI-RS linked to the suspended SP CSI reporting to activate and support the suspended SP CSI reporting simultaneously with switching to BWP#1. Therefore, upon BWP switching, the BS may configure whether to suspend or deactivate active SP CSI reporting on PUCCH. For example, when switching back to the linked BWP, the BS may configure whether the SP CSI reporting is automatically activated without an additional activation mechanism or re-enabled only when there is an additional activation mechanism (e.g., indicating activation of the SP CSI reporting by DCI and/or a MAC CE) in spite of switching back to the linked BWP. Alternatively, when NES mode-on is configured/indicated or a specific DRX configuration is applied for a serving cell, the UE may consider already active SP CSI reporting to be deactivated during BWP switching. For example, the UE may consider the SP CSI reporting to be re-enabled only when there is an additional activation mechanism, such as indicating activation of the SP CSI reporting by DCI and/or a MAC CE, even if it is switched back to the linked BWP.

The above method may be linked to a DRX configuration. For example, in the case where an SP CSI reporting to be activated is configured for each DRX under a plurality of DRX configurations (e.g., DRX configuration #1 and DRX configuration #2), and then a specific DRX configuration is activated, the UE may activate only the SP CSI reporting linked to the DRX configuration and deactivate the other already active SP CSI reporting(s).

Alternatively, even for one DRX configuration, a different activation and/or deactivation operation may also be applied depending on whether it is a DRX active time (e.g., a time period during which an onDurationtimer and/or inacitivitytimer is running, or a time during which the UE should be awake for transmission and/or reception).

That is, in the DRX active time, the UE may activate only a linked SP CSI reporting and deactivate the other already active SP CSI reporting(s). For example, in the DRX active time, the UE may perform CSI reporting according to the SP CSI reporting linked to the DRX active time. Conversely, outside the DRX active time, the UE may perform CSI reporting according to an SP CSI reporting linked to a corresponding DRX inactive time.

The above method may be linked to BWP switching. For example, in the case where an SP CSI reporting to be activated is configured for each BWP under a plurality of BWP configurations (e.g., BWP configuration #1 and BWP configuration #2), and then a specific DRX configuration is activated or switching to a specific BWP is performed, the UE may activate only an SP CSI reporting linked to the BWP configuration and deactivate the other already active SP CSI reporting(s).

In activating/deactivating a specific SP CSI-RS reporting, an operation of linking the operation to an SP SRS resource or SP SRS resource set may also be considered. For example, when specific SP SRS resources or SP SRS resource sets are linked to CSI-RS resources or CSI-RS resource sets, and a specific CSI-RS resource or CSI-RS resource set is activated/deactivated, an indicated or associated SP SRS resource or SP SRS resource set may be activated/deactivated at once. Being associated may mean that an association has been preconfigured/predefined separately, a QCL source-target relationship has been established, or an RS for spatial relation information has been configured.

According to the above-described [Method #1] and [Method #2], the power consumption of the BS may be controlled when needed by dynamically adjusting the number of Tx antenna ports for a CSI-RS. As a consequence, the power of the BS may be reduced efficiently.

[Method #3] Method of assigning different priorities to CSI reportings

[Table 5]

| |
|---|
| 5.2.1.6 CSI processing criteria<br>The UE indicates the number of supported simultaneous CSI calculations $N_{CPU}$ with parameter simultaneousCSI-ReportsPerCC in a component carrier, and simultaneousCSI-ReportsAllCC across all component carriers. If a UE supports $N_{CPU}$ simultaneous CSI calculations it is said to have $N_{CPU}$ CSI processing units for processing CSI reports. If L CPUs are occupied for calculation of CSI reports in a given OFDM symbol, the UE has $N_{CPU} - L$ unoccupied CPUs. If N CSI reports start occupying their respective CPUs on the same OFDM symbol on which $N_{CPU} - L$ CPUs are unoccupied, where each CSI report $n = 0, \ldots, N - 1$ corresponds to $O_{CPU}^{(n)}$, the UE is not required to update the $N - M$ requested CSI reports with lowest priority (according to Clause 5.2.5), where $0 \leq M \leq N$ is the largest value such that $\sum_{n=0}^{M-1} O_{CPU}^{(n)} \leq N_{CPU} - L$ holds.<br>5.2.5 Priority rules for CSI reports<br>CSI reports are associated with a priority value $Pri_{iCSI}(y, k, c, s) = 2 \cdot N_{cells} \cdot M_s \cdot y + N_{cells} \cdot M_s \cdot k + M_s \cdot c + s$<br>where |

(continued)

- $y$ = 0 for aperiodic CSI reports to be carried on PUSCH $y$ = 1 for semi-persistent CSI reports to be carried on PUSCH, $y$ = 2 for semi-persistent CSI reports to be carried on PUCCH and $y$ = 3 for periodic CSI reports to be carried on PUCCH;

- $k$ = 0 for CSI reports carrying L1-RSRP or L1-SINR and $k$ = 1 for CSI reports not carrying L1-RSRP or L1-SINR;

- c is the serving cell index and $N_{cells}$ is the value of the higher layer parameter maxNrofServingCells;

- s is the reportConfigID and $M_s$ is the value of the higher layer parameter maxNrofCSI-ReportConfigurations.

A first CSI report is said to have priority over second CSI report if the associated $Pri_{iCSI}(y,k,c,s)$ value is lower for the first report than for the second report.

As illustrated in Table 5, which is an excerpt from 3GPP TS 38.214, when the UE needs to calculate a larger amount of CSI reporting than its own CSI processing criteria, it first performs an update for a CSI report with a high priority, and an update of a CSI report with a relatively lower priority is not required. For example, when there are CSI report #1 linked to an N1-port CSI-RS resource or N1-port CSI-RS resource set and CSI report #2 linked to an N2-port CSI-RS resource or N2-port CSI-RS resource set (N1 < N2), the priority of CSI report #2 may be higher according to the formula in Table 5.

For example, when for the same serving cell index, CSI report #1 is a periodic CSI report and CSI report #2 is an aperiodic CSI report, the priority of CSI report #2 may be higher than that of CSI report #1 because a PriiCSI(y,k,c,s) value corresponding to CSI report #2 is lower.

However, when the BS is operating in an energy saving mode, it may be preferable to prioritize a CSI update for a CSI-RS resource or CSI-RS resource set with fewer antenna ports by assigning a higher priority to CSI report #1.

To this end, the BS may set/indicate an offset value (e.g., -2) for PriiCSI(y,k,c,s) for a specific CSI report (e.g., CSI report #1) or an offset value (e.g., -2) for some of parameters that form PriiCSI(y,k,c,s).

For example, the BS may configure/indicate an additional offset value of PriiCSI(y,k,c,s) for CSI report #1 to X (e.g., -2) to increase the priority of the CSI report, or set/indicate an additional offset value of PriiCSI(y,k,c,s) for CSI report #2 to Y (e.g., 2) to decrease the priority of the CSI report. Meanwhile, the offset value may be predefined or configured by higher layer signaling, and whether to apply an offset value or the offset value to be applied may be explicitly signaled, or implicitly indicated by a separate indicator that indicates the initiation of the energy saving operation or the NES state or NES mode of the BS (e.g., time axis on/off and/or a change in the amount of frequency resources and/or power increase/decrease and/or antenna port on/off and/or TRP on/off in the spatial domain).

Alternatively, when the NES state is indicated as described above, whether to apply a corresponding offset value or the offset value to be applied may be determined or indicated, or the offset value to be applied may be determined or indicated according to the NES state. For example, when as CSI group index #2 is turned on by DCI or a MAC CE in the above [Method #1], the UE implicitly recognizes that the energy saving operation or the NES state or NES mode of the BS is performed, the additional offset value X (e.g., -2) of PriiCSI(y,k,c,s) for CSI report #1 may be applied, and when CSI group index #1 is turned on, the additional offset value Y (e.g., -2) may not be applied.

According to [Method #3], as the number of Tx antennas and hence transmission power for a CSI-RS are changed, an offset value may be assigned to the priority of an actual CSI report, thereby adjusting the CSI report to be actually prioritized suitably for a current situation.

[Method #4] Method of configuring a transmission configuration indicator (TCI) and transmitting/receiving a DL/UL signal/channel

Depending on antenna elements that the BS is turning on, there may be an invalid CSI-RS resource, CSI-RS resource set, or SSB index. In addition, transmission/reception of a DL/UL signal (e.g., CSI-RS, PDCCH, PDSCH, SRS, or PUSCH) associated with a TCI or spatial relation information corresponding to the invalid CSI-RS resource, CSI-RS resource set, or SSB index may not be performed, or the UE may not expect a transmission/reception indication for the DL/UL signal. For example, when the BS turns on only 16 antenna ports out of 32 antenna ports, a CSI-RS resource or CSI-RS resource set configured to use all 32 antenna ports may be invalid.

For example, when the BS indicates switching between CSI groups (e.g., indicates to turn off CSI group 0 and turn on CSI group 1) by signaling such as DCI or a MAC CE as in the above [Method #1], upon receipt of the indication, the UE may determine that CSI-RSs linked to CSI group index #0 are invalid and CSI-RSs linked to CSI group index #1 are valid.

The UE may not expect PDSCH scheduling indicating a TCI index for which a CSI-RS linked to CSI group index #0 is a QCL source, or even if the PDSCH is scheduled, the UE may not receive the PDSCH, may not transmit HARQ-ACK information corresponding to the PDSCH, or may transmit the HARQ-ACK information as a NACK. In another example, the UE may not expect PUSCH scheduling indicating an SRS resource index for which spatial relation information is configured with a CSI-RS linked to CSI group index #0, or may not transmit a corresponding PUSCH even if the PUSCH is scheduled.

In another method, a plurality of TCI sets related to TCI states may be preconfigured, and a TCI set corresponding to a valid CSI-RS resource, CSI-RS resource set, or SSB index may be activated. Further, the UE may perform transmission/reception of a DL/UL signal (e.g., CSI-RS, PDCCH, PDSCH, SRS, or PUSCH) associated with a TCI or spatial relation information corresponding to the activated TCI set.

For example, when a plurality of TCI state IDs are configured for a specific code point of a TCI field indicated by DCI, the UE may interpret a TCI state ID value corresponding to the code point differently depending on a current valid CSI-RS resource or an antenna port or TRP turned on/off by the BS. In this case, for example, the DCI indicating the TCI field may be a TCI that schedules a PDSCH.

In another example, when a plurality of QCL sources are configured for a specific TCI state ID, the UE may recognize a QCL source differently depending on a current valid CSI-RS resource or an antenna port or TRP turned on/off by the BS.

In another example, a plurality of TCI state lists (e.g., tci-StatesToAddModList or dl-orJoint-TCI-State-ToAddModList) may be configured, and the UE may perform transmission/reception of a DL/UL signal based on a corresponding list according to a current valid CSI-RS resource or an antenna port or TRP turned on/off by the BS. The above plurality of TCI sets and/or TCI states may correspond to a single TRP. For example, a plurality of TCI sets and/or a plurality of TCI states may be configured for each TRP, and the above methods may be applied and performed in a single TRP.

Similarly, when a plurality of PUCCH resource sets are preconfigured, a corresponding PUCCH resource set among the plurality of PUCCH resource sets may be activated according to a valid CSI-RS resource or SSB index, or an antenna port or TRP turned on/off by the BS, so that when the UE selects a PUCCH resource corresponding to a PUCCH resource index (PRI) indicated by a DL assignment, the UE may select a PUCCH resource in the current activated PUCCH resource set.

For a periodic PUCCH or semi-persistent PUCCH preconfigured with a resource, a plurality of PUCCH resources may also be preconfigured, and the UE may transmit the PUCCH in a corresponding PUCCH resource according to a valid CSI-RS resource or SSB index or an antenna port or TRP turned on/off by the BS. When there is a separate indicator indicating the initiation of the energy saving operation or the NES state or NES mode of the BS (e.g., time-axis on/off and/or a change in the amount of frequency resources and/or power increase/decrease and/or antenna port on/off and/or TRP on/off in the spatial domain), and the UE is assumed to be capable of recognizing that the energy saving operation or the NES state or NES mode of the BS is initiated by receiving the indicator by specific signaling, then PUCCH resource set switching may be performed depending on whether the energy saving operation or the NES state or NES mode of the BS is initiated, while two PUCCH resource sets, PUCCH resource set #1 including only a single-TRP PUCCH and PUCCH resource set #2 including a multi-TRP PUCCH and/or a single-TRP PUCCH are configured. For example, when the energy saving operation or the NES state or NES mode of the BS is initiated, PUCCH resource set #1 may be activated, whereas when the energy saving operation or the NES state or the NES mode of the BS is not initiated, PUCCH resource set #2 may be activated. Further, the UE may transmit a PUCCH in a PUCCH resource in the corresponding or activated PUCCH resource set.

The above method may be linked to a DRX configuration. For example, in the case where a valid TCI state, spatial relation information, or PUCCH resource set is configured for each DRX under a plurality of DRX configurations (e.g., DRX configuration #1 and DRX configuration #2), and then a specific DRX configuration is activated, the UE may perform a DL/UL signal/channel transmission/reception based on a TCI state, spatial relation information, or PUCCH resource set linked to the DRX configuration.

Alternatively, even for one DRX configuration, a different TCI state, spatial relation information, or PUCCH resource set may also be applied depending on whether it is a DRX active time (e.g., a time period during which an onDurationtimer and/or inacitivitytimer is running, or a time during which the UE should be awake for transmission and/or reception). That is, in the DRX active time, the UE may perform a DL/UL signal/channel transmission/reception based on a linked TCI state, spatial relation information, or PUCCH resource set. For example, in the DRX active time, the UE may perform a DL/UL signal/channel transmission/reception based on a TCI state, spatial relation information, or PUCCH resource set linked to the DRX active time. Conversely, outside the DRX active time, the UE may perform a DL/UL signal/channel transmission/reception based on a TCI state, spatial relation information, or PUCCH resource set linked to a corresponding DRX inactive time.

The above method may be linked to a BWP configuration. For example, in the case where a valid TCI state, spatial relation information, or PUCCH resource set is configured for each DRX under a plurality of BWP configurations (e.g., BWP configuration #1 and BWP configuration #2), and then a specific BWP configuration is activated or switching to the specific BWP is performed, the UE may perform a DL/UL signal/channel transmission/reception based on a TCI state, spatial relation information, or PUCCH resource set linked to the BWP configuration.

According to [Method #4], different PUCCH resource and TCI configurations are applied according to a valid CSI-RS resource and/or SSB, and a TCI or PUCCH resource may be flexibly changed based on the number of antenna ports that is dynamically changed depending on the CSI-RS resource and/or SSB, thereby enabling efficient DL/UL transmission and reception.

[Method #5] Method of, when CSI reporting #1 is triggered or activated, adaptively responding to per-BS antenna port element on/off or per-BS antenna port on/off by not performing or deactivating another CSI reporting #2

[Table 6]

| |
|---|
| 5.2.1.5.1     Aperiodic CSI Reporting/Aperiodic CSI-RS when the triggering PDCCH and the CSI-RS have the same numerology<br>For CSI-RS resource sets associated with Resource Settings configured with the higher layer parameter resourceType set to 'aperiodic', 'periodic', or 'semi-persistent', trigger states for Reporting Setting(s) (configured with the higher layer parameter reportConfigType set to 'aperiodic') and/or Resource Setting for channel and/or interference measurement on one or more component carriers are configured using the higher layer parameter CSI-AperiodicTriggerStateList. For aperiodic CSI report triggering, a single set of CSI triggering states are higher layer configured, wherein the CSI triggering states can be associated with any candidate DL BWP. A UE is not expected to receive more than one DCI with non-zero CSI request field per slot per cell. A UE is not expected to receive DCI with non-zero CSI request field within a cell group in a slot overlapping with any slot receiving DCI with non-zero CSI request field in the same cell group. A UE is not expected to be configured with different TCI-StateId's for the same aperiodic CSI-RS resource ID configured in multiple aperiodic CSI-RS resource sets with the same triggering offset in the same aperiodic trigger state. A UE is not expected to receive more than one aperiodic CSI report request for transmission in a given slot per cell. A UE is not expected to receive an aperiodic CSI report request for transmission in a slot overlapping with any slot having an aperiodic CSI report transmission in the same cell group. If a UE does not indicate its capability of CSItriggerStateContainingNonactiveBWP the UE is not expected to be triggered with a CSI report for a non-active DL BWP. Otherwise, when a UE is triggered with a CSI report for a DL BWP that is non-active when expecting to receive the most recent occasion, no later than the CSI reference resource, of the associated NZP CSI-RS, the UE is not expected to report the CSI for the non-active DL BWP and the CSI report associated with that BWP is omitted. When a UE is triggered with aperiodic NZP CSI-RS in a DL BWP that is non-active when expecting to receive the NZP CSI-RS, the UE is not expected to measure the aperiodic CSI-RS. In the carrier of the serving cell expecting to receive that associated NZP CSI-RS, if the active DL BWP when receiving the NZP CSI-RS is different from the active DL BWP when receiving the triggering DCI,<br>-     the last symbol of the PDCCH span of the DCI carrying the BWP switching shall be no later than the last symbol of the PDCCH span of the DCI carrying the CSI trigger, irrespective of whether they are in the same carrier of a serving cell or not and irrespective of whether they are in the same SCS or not; |

- the UE is not expected to have any other BWP switching in that carrier after the last symbol of the PDCCH span covering the DCI carrying the CSI trigger and before the first symbol of the triggered NZP CSI-RS or CSI-IM.

- when the PDCCH reception includes two PDCCH candidates from two respective search space sets, as described in clause 10.1 of [6, TS 38.213], the span that involves the PDCCH candidate that ends later in time is used.

A trigger state is initiated using the CSI request field in DCI.

- When all the bits of CSI request field in DCI are set to zero, no CSI is requested.

- When the number of configured CSI triggering states in CSI-AperiodicTriggerStateList is greater than $2^{N_{\rm TS}}-1$, where $N_{\rm TS}$ is the number of bits in the DCI CSI request field, the UE receives a subselection indication, as described in clause 6.1.3.13 of [10, TS 38.321], used to map up to $2^{N_{\rm TS}}-1$ trigger states to the codepoints of the CSI request field in DCI. $N_{\rm TS}$ is configured by the higher layer parameter reportTriggerSize where $N_{TS} \in \{0,1,2,3,4,5,6\}$. When the UE would transmit a PUCCH with HARQ-ACK information in slot n corresponding to the PDSCH carrying the subselection indication, the corresponding action in [10, TS 38.321] and UE assumption on the mapping of the selected CSI trigger state(s) to the codepoint(s) of DCI CSI request field shall be applied starting from the first slot that is after slot $n + 3N_{slot}^{subframe,\mu} + \frac{2^{\mu}}{2^{\mu_{Kmac}}} \cdot k_{\rm mac}$ where · is the SCS configuration for the PUCCH and $\mu_{K_{mac}}$ is the subcarrier spacing configuration for $k_{mac}$ with a value of 0 for frequency range 1, and $k_{\rm mac}$ is provided by K-Mac or $k_{\rm mac} = 0$ if K-Mac is not provided..

- When the number of CSI triggering states in CSI-AperiodicTriggerStateList is less than or equal to $2^{N_{\rm TS}}-1$, the CSI request field in DCI directly indicates the triggering state.

- For each aperiodic CSI-RS resource in a CSI-RS resource set associated with each CSI triggering state, the UE is indicated the quasi co-location configuration of quasi co-location RS source(s) and quasi co-location type(s), as described in clause 5.1.5, through higher layer signaling of qcl-info which contains a list of references to TCI-State's for the aperiodic CSI-RS resources associated with the CSI triggering state. If a State referred to in the list is configured with a reference to an RS configured with qcl-Type set to 'typeD', that RS may be an SS/PBCH block located in the same or different CC/DL BWP or a CSI-RS resource configured as periodic or semi-persistent located in the same or different CC/DL BWP.

- If the scheduling offset between the last symbol of the PDCCH carrying the triggering DCI and the first symbol of the aperiodic CSI-RS resources in a NZP-CSI-RS-ResourceSet configured without higher layer parameter trs-Info is smaller than the UE reported threshold beamSwitchTiming, as defined in [13, TS 38.306], when the reported value is one of the values of $\{14, 28, 48\} \cdot 2^{max(0,\mu_{CSIRS}-3)}$ and

enableBeamSwitchTiming is not provided, or is smaller than $48 \cdot 2^{max(0, \mu_{CSIRS}-3)}$ when the UE provides beamSwitchTiming-r16, enableBeamSwitchTiming is provided and the NZP-CSI-RS-ResourceSet is configured with the higher layer parameter repetition set to 'off' or configured without the higher layer parameter repetition, or is smaller than the UE reported threshold beamSwitchTiming-r16, when enableBeamSwitchTiming is provided and the NZP-CSI-RS-ResourceSet is configured with the higher layer parameter repetition set to 'on'.

- If a UE is configured with enableDefaultTCI-StatePerCoresetPoolIndex and the UE is configured by higher layer parameter PDCCH-Config that contains two different values of coresetPoolIndex in ControlResourceSet

- if there is any other DL signal with an indicated TCI state in the same symbols as the CSI-RS, the UE applies the QCL assumption of the other DL signal also when receiving the aperiodic CSI-RS. The other DL signal refers to PDSCH scheduled by a PDCCH associated with the same coresetPoolIndex as the PDCCH triggering the aperiodic CSI-RS and scheduled with offset larger than or equal to the threshold timeDurationForQCL, as defined in [13, TS 38.306], aperiodic CSI-RS triggered by a PDCCH associated with the same coresetPoolIndex as the PDCCH triggering the aperiodic CSI-RS and scheduled with offset larger than or equal to the UE reported threshold beamSwitchTiming when the reported value is one of the values {14,28,48}· $2^{max(0, \mu_{CSIRS}-3)}$ and enableBeamSwitchTiming is not provided, aperiodic CSI-RS triggered by a PDCCH associated with the same coresetPoolIndex as the PDCCH triggering the aperiodic CSI-RS and scheduled with offset larger than or equal to 48· $2^{max(0, \mu_{CSIRS}-3)}$ when the reported value of beamSwitchTiming-r16 is one of the values {224, 336}· $2^{max(0, \mu_{CSIRS}-3)}$ and enableBeamSwitchTiming is provided, periodic CSI-RS, semi-persistent CSI-RS;

- else, the UE applies the QCL parameter(s) of the CORESET associated with a monitored search space with the lowest controlResourceSetId among CORESETs, which are configured with the same value of coresetPoolIndex as the PDCCH triggering that aperiodic CSI-RS, in the latest slot in which one or more CORESETs are associated with the same value of coresetPoolIndex as the PDCCH triggering that aperiodic CSI-RS

- else if a UE is configured with enableTwoDefaultTCI-States and at least one TCI codepoint is mapped to two TCI states

- if there is any other DL signal with an indicated TCI state in the same symbols as the CSI-RS, the UE applies the QCL assumption of the other DL signal also when receiving the aperiodic CSI-RS. The other DL signal refers to PDSCH scheduled with offset larger than or equal to the threshold timeDurationForQCL, as defined in [13, TS 38.306], aperiodic CSI-RS scheduled with offset larger than or equal to the UE

reported threshold beamSwitchTiming when the reported value is one of the values {14,28,48}· $2^{max(0,\mu_{CSIRS}-3)}$ and enableBeamSwitchTiming is not provided, aperiodic CSI-RS scheduled with offset larger than or equal to 48· $2^{max(0,\mu_{CSIRS}-3)}$ when the reported value of beamSwitchTiming-r16 is one of the values {224, 336}· $2^{max(0,\mu_{CSIRS}-3)}$ and enableBeamSwitchTiming is provided, periodic CSI-RS, semi-persistent CSI-RS. If there is a PDSCH indicated with two TCI states in the same symbols as the CSI-RS, the UE applies the first TCI state of the two TCI states when receiving the aperiodic CSI-RS.

-       else, the UE applies the first one of two TCI states corresponding to the lowest TCI codepoint among those mapped to two TCI states and applicable to the PDSCH within the active BWP of the cell in which the CSI-RS is to be received when receiving the aperiodic CSI-RS.

-       else if a UE is configured with sfnSchemePdcch set to 'sfnSchemeA', it is not configured with enableTwoDefaultTCI-States, and the two TCI states are activated for the CORESET by the activation command as described in clause 6.1.3.x of [10, TS 38.321]

-       if there is any other DL signal with an indicated TCI state in the same symbols as the CSI-RS, the UE applies the QCL assumption of the other DL signal also when receiving the aperiodic CSI-RS. The other DL signal refers to PDSCH scheduled with an offset larger than or equal to the threshold timeDurationForQCL, as defined in [13, TS 38.306], periodic CSI-RS, semi-persistent CSI-RS, aperiodic CSI-RS in a NZP-CSI-RS-ResourceSet scheduled with offset larger than or equal to the UE reported threshold beamSwitchTiming when the reported value is one of the values {14,28,48} and when enableBeamSwitchTiming is not provided or the NZP-CSI-RS-ResourceSet is configured with the higher layer parameter trs-Info , aperiodic CSI-RS in a NZP-CSI-RS-ResourceSet configured with the higher layer parameter repetition set to 'off' or configured without the higher layer parameters repetition and trs-Info scheduled with offset larger than or equal to 48 when the UE provides beamSwitchTiming-r16 and enableBeamSwitchTiming is provided, aperiodic CSI-RS in a NZP-CSI-RS-ResourceSet configured with the higher layer parameter repetition set to 'on' scheduled with offset larger than or equal to the UE reported threshold beamSwitchTiming-r16 and enableBeamSwitchTiming is provided;

-       else if, the UE applies the first one of two TCI states indicated for the CORESET with the lowest CORESET ID in the latest slot within the active BWP of the cell in which the CSI-RS is to be received when receiving the aperiodic CSI-RS,

-       else if there is any other DL signal with an indicated TCI state in the same symbols as the CSI-RS, the UE applies the QCL assumption of the other DL signal also when receiving the aperiodic CSI-RS. The other DL signal refers to PDSCH scheduled

with offset larger than or equal to the threshold timeDurationForQCL, as defined in [13, TS 38.306], periodic CSI-RS, semi-persistent CSI-RS, aperiodic CSI-RS in a NZP-CSI-RS-ResourceSet scheduled with offset larger than or equal to the UE reported threshold beamSwitchTiming when the reported value is one of the values $\{14,28,48\} \cdot 2^{max(0,\mu_{CSIRS}-3)}$ and when enableBeamSwitchTiming is not provided or the NZP-CSI-RS-ResourceSet is configured with the higher layer parameter trs-Info , aperiodic CSI-RS in a NZP-CSI-RS-ResourceSet configured with the higher layer parameter repetition set to 'off' or configured without the higher layer parameters repetition and trs-Info scheduled with offset larger than or equal to $48 \cdot 2^{max(0,\mu_{CSIRS}-3)}$ when the UE provides beamSwitchTiming-r16 and enableBeamSwitchTiming is provided, aperiodic CSI-RS in a NZP-CSI-RS-ResourceSet configured with the higher layer parameter repetition set to 'on' scheduled with offset larger than or equal to the UE reported threshold beamSwitchTiming-r16 and enableBeamSwitchTiming is provided;

- else if at least one CORESET is configured for the BWP in which the aperiodic CSI-RS is received, when receiving the aperiodic CSI-RS, the UE applies the QCL assumption used for the CORESET associated with a monitored search space with the lowest controlResourceSetId in the latest slot in which one or more CORESETs within the active BWP of the serving cell are monitored;

- else if the UE is configured with enableDefaultBeamForCCS and when receiving the aperiodic CSI-RS, the UE applies the QCL assumption of the lowest-ID activated TCI state applicable to the PDSCH within the active BWP of the cell in which the CSI-RS is to be received.

- If the scheduling offset between the last symbol of the PDCCH carrying the triggering DCI and the first symbol of the aperiodic CSI-RS resources in a NZP-CSI-RS-ResourceSet is equal to or greater than the UE reported threshold beamSwitchTiming when the reported value is one of the values of $\{14,28,48\} \cdot 2^{max(0,\mu_{CSIRS}-3)}$ and enableBeamSwitchTiming is not provided and the NZP-CSI-RS-ResourceSet is not configured with higher layer parameter trs-Info, or is equal to or greater than the UE reported threshold beamSwitchTiming when the reported value is one of the values of $\{14,28,48\} \cdot 2^{max(0,\mu_{CSIRS}-3)}$ and the NZP-CSI-RS-ResourceSet is configured with higher layer parameter trs-Info, or is equal to or greater than $48 \cdot 2^{max(0,\mu_{CSIRS}-3)}$ when the UE provides beamSwitchTiming-r16 and enableBeamSwitchTiming is provided and the NZP-CSI-RS-ResourceSet is configured with the higher layer parameter repetition set to 'off' or configured without the higher layer parameters repetition and trs-Info, or is equal to or greater than the UE reported threshold beamSwitchTiming-r16, when enableBeamSwitchTiming is provided and the NZP-CSI-RS-ResourceSet is configured with the higher layer parameter repetition set to 'on', the UE is expected to apply the

QCL assumptions in the indicated TCI states for the aperiodic CSI-RS resources in the CSI triggering state indicated by the CSI trigger field in DCI.

- The UE is not expected to receive aperiodic CSI-RS and PDSCH/aperiodic CSI-RS associated with different values of coresetPoolIndex in overlapped symbol(s). The UE is not expected to receive aperiodic CSI-RS and semi-persistent/periodic CSI-RS with different 'QCL-type D' in overlapped symbol(s).

- If configured, the UE may assume that a CSI-RS resource in an aperiodic CSI-RS resource set configured without trs-Info is quasi co-located with the RS(s) in the indicated TCI state.

- A non-zero codepoint of the CSI request field in the DCI is mapped to a CSI triggering state according to the order of the associated positions of the up to $2^{N_{TS}} - 1$ trigger states in CSI-AperiodicTriggerStateList with codepoint '1' mapped to the triggering state in the first position.

For a UE configured with the higher layer parameter CSI-AperiodicTriggerStateList, if a Resource Setting linked to a CSI-ReportConfig has multiple aperiodic resource sets, only one of the aperiodic CSI-RS resource sets from the Resource Setting is associated with the trigger state, and the UE is higher layer configured per trigger state per Resource Setting to select the one CSI-IM/NZP CSI-RS resource set from the Resource Setting.

When aperiodic CSI-RS is used with aperiodic reporting, the CSI-RS offset is configured per resource set by the higher layer parameter aperiodicTriggeringOffset or aperiodicTriggeringOffset-r16. The CSI-RS triggering offset has the values of {0, 1, 2, 3, 4, 5, 6, ..., 15, 16, 24} slots. If the UE is not configured with minimumSchedulingOffsetK0 for any DL BWP and minimumSchedulingOffsetK2 for any UL BWP and if all the associated trigger states do not have the higher layer parameter qcl-Type set to 'typeD' in the corresponding TCI states, the CSI-RS triggering offset is fixed to zero. The aperiodic triggering offset of the CSI-IM follows offset of the associated NZP CSI-RS for channel measurement. The aperiodic CSI-RS is transmitted in a slot $K_s$, $K_s = n + X + \left\lfloor \left( \frac{N^{CA}_{slot,offset,PDCCH}}{2^{\mu_{offset,PDCCH}}} - \frac{N^{CA}_{slot,offset,CSIRS}}{2^{\mu_{offset,CSIRS}}} \right) \cdot 2^{\mu_{CSIRS}} \right\rfloor$, if UE is configured with ca-SlotOffset for at least one of the triggered and triggering cell, and in slot $K_s = n + X$, otherwise, and where

- n is the slot containing the triggering DCI, X is the CSI-RS triggering offset according to the higher layer parameter aperiodicTriggeringOffset or aperiodicTriggeringOffset-r16,

- $N^{CA}_{slot, offset, PDCCH}$ and $\mu_{offset,PDCCH}$ are the $N^{CA}_{slot, offset}$ and the $\mu_{offset}$ which are determined by higher-layer configured ca-SlotOffset for the cell receiving the PDCCH, $N^{CA}_{slot, offset, CSIRS}$ and $\mu_{offset,CSIRS}$ are the $N^{CA}_{slot, offset}$ and the $\mu_{offset}$ which are determined by

higher-layer configured ca-SlotOffset for the cell transmitting the CSI-RS respectively, as defined in [4, TS 38.211] clause 4.5.

The UE does not expect that aperiodic CSI-RS is transmitted before the OFDM symbol(s) carrying its triggering DCI. When the minimum scheduling offset restriction is applied, UE is not expected to be triggered by CSI triggering state indicated by the CSI request field in DCI in which CSI-RS triggering offset is smaller than the currently applicable minimum scheduling offset restriction K0min.

If interference measurement is performed on aperiodic NZP CSI-RS, a UE is not expected to be configured with a different aperiodic triggering offset of the NZP CSI-RS for interference measurement from the associated NZP CSI-RS for channel measurement.

If the UE is configured with a single carrier for uplink, the UE is not expected to transmit more than one aperiodic CSI report triggered by different DCIs on overlapping OFDM symbols.

When the PDCCH reception includes two PDCCH candidates from two respective search space sets, as described in clause 10.1 of [6, TS 38.213], for the purpose of determining scheduling offset between the last symbol of the PDCCH carrying the triggering DCI and the first symbol of the aperiodic CSI-RS resources, the PDCCH candidate that ends later in time is used, and the UE does not expect that the aperiodic CSI-RS is transmitted before the first symbol of the PDCCH candidate that starts later in time.

5.2.1.5.1a    Aperiodic CSI Reporting/Aperiodic CSI-RS when the triggering PDCCH and the CSI-RS have different numerologies

When the triggering PDCCH and the triggered aperiodic CSI-RS are of different numerologies, the behavior defined in 5.2.1.5.1 for the case where the numerologies are the same applies with the following exceptions:

Beam switch timing:

-        If the scheduling offset between the last symbol of the PDCCH carrying the triggering DCI and the first symbol of the aperiodic CSI-RS resources in a NZP-CSI-RS-ResourceSet configured without higher layer parameter trs-Info is smaller than beamSwitchTiming + d $\cdot$ $2^{\mu_{CSIRS}}/2^{\mu_{PDCCH}}$ in CSI-RS symbols, as defined in [13, TS 38.306], when the reported value is one of the values of {14, 28, 48}$\cdot$ $2^{max(0,\mu_{CSIRS}-3)}$ and enableBeamSwitchTiming is not provided, or is smaller than 48$\cdot$ $2^{max(0,\mu_{CSIRS}-3)}$+ $d \cdot 2^{\mu_{CSIRS}}/2^{\mu_{PDCCH}}$ in CSI-RS symbols when the UE provides beamSwitchTiming-r16 and enableBeamSwitchTiming is provided and the NZP-CSI-RS-ResourceSet is configured with the higher layer parameter repetition set to 'off' or configured without the higher layer parameter repetition, or is smaller than beamSwitchTiming-r16 + $d \cdot$ $2^{\mu_{CSIRS}}/2^{\mu_{PDCCH}}$ in CSI-RS symbols, when enableBeamSwitchTiming is provided and the

NZP-CSI-RS-ResourceSet is configured with the higher layer parameter repetition set to 'on', where if the μPDCCH < μCSIRS, the beam switching timing delay d is defined in Table 5.2.1.5.1a-1, else d is zero

- if one of the associated trigger states has the higher layer parameter qcl-Type set to 'typeD',

- if there is any other DL signal with an indicated TCI state in the same symbols as the CSI-RS, the UE applies the QCL assumption of the other DL signal also when receiving the aperiodic CSI-RS. The other DL signal refers to PDSCH scheduled with offset larger than or equal to the threshold timeDurationForQCL, as defined in [13, TS 38.306], periodic CSI-RS, semi-persistent CSI-RS, aperiodic CSI-RS scheduled with offset larger than or equal to beamSwitchTiming + d $\cdot 2^{\mu_{CSIRS}}/2^{\mu_{PDCCH}}$ in CSI-RS symbols when the reported value is one of the values $\{14,28,48\} \cdot 2^{max(0,\mu_{CSIRS}-3)}$ and when enableBeamSwitchTiming is not provided or the NZP-CSI-RS-ResourceSet is configured with the higher layer parameter trs-Info, aperiodic CSI-RS in a NZP-CSI-RS-ResourceSet configured with the higher layer parameter repetition set to 'off' or configured without the higher layer parameters repetition and trs-Info scheduled with offset larger than or equal to 48 $\cdot 2^{max(0,\mu_{CSIRS}-3)} + d \cdot 2^{\mu_{CSIRS}}/2^{\mu_{PDCCH}}$ in CSI-RS symbols when the UE provides beamSwitchTiming-r16 and enableBeamSwitchTiming is provided, aperiodic CSI-RS in a NZP-CSI-RS-ResourceSet configured with the higher layer parameter repetition set to 'on' and scheduled with offset larger than or equal to beamSwitchTiming-r16 + d $\cdot 2^{\mu_{CSIRS}}/2^{\mu_{PDCCH}}$ in CSI-RS symbols when enableBeamSwitchTiming is provided;

- else,

- if at least one CORESET is configured for the BWP in which the aperiodic CSI-RS is to be received, when receiving the aperiodic CSI-RS, the UE applies the QCL assumption used for the CORESET associated with a monitored search space with the lowest controlResourceSetId in the latest slot in which one or more CORESETs within the active BWP of the serving cell are monitored.

- else if the UE is configured with enableDefaultBeamForCCS, when receiving the aperiodic CSI-RS, the UE applies the QCL assumption of the lowest-ID activated TCI state applicable to the PDSCH within the active BWP of the cell in which the CSI-RS is to be received.

- If the scheduling offset between the last symbol of the PDCCH carrying the triggering DCI and the first symbol of the aperiodic CSI-RS resources in a NZP-CSI-RS-ResourceSet is equal to or greater than beamSwitchTiming + d $\cdot 2^{\mu_{CSIRS}}/2^{\mu_{PDCCH}}$ in CSI-RS symbols, when the reported value is one of the values of $\{14,28,48\} \cdot 2^{max(0,\mu_{CSIRS}-3)}$ and enableBeamSwitchTiming is not provided and the NZP-CSI-RS-ResourceSet is not configured with higher layer parameter trs-Info, or is equal to or

greater than beamSwitchTiming + d $\cdot 2^{\mu_{CSIRS}}/2^{\mu_{PDCCH}}$ in CSI-RS symbols when the reported value is one of the values of {14,28,48}$\cdot 2^{max(0,\mu_{CSIRS}-3)}$ and the NZP-CSI-RS-ResourceSet is configured with higher layer parameter trs-Info, or is equal to or greater than 48$\cdot 2^{max(0,\mu_{CSIRS}-3)}+d \cdot 2^{\mu_{CSIRS}}/2^{\mu_{PDCCH}}$ in CSI-RS symbols when the UE provides beamSwitchTiming-r16 and enableBeamSwitchTiming is provided and the NZP-CSI-RS-ResourceSet is configured with the higher layer parameter repetition set to 'off' or configured without the higher layer parameters repetition and trs-Info, or is equal to or greater than beamSwitchTiming-r16 + d $2^{\mu_{CSIRS}}/2^{\mu_{PDCCH}}$ in CSI-RS symbols when enableBeamSwitchTiming is provided and the NZP-CSI-RS-ResourceSet is configured with the higher layer parameter repetition set to 'on', where if the µPDCCH < µCSIRS, the beam switching timing delay d is defined in Table 5.2.1.5.1a-1, else d is zero, the UE is expected to apply the QCL assumptions in the indicated TCI states for the aperiodic CSI-RS resources in the CSI triggering state indicated by the CSI trigger field in DCI. For µPDCCH = 5, UE shall report one of values of {56, 112} for additional beam switching time delay d.

Table 5.2.1.5.1a-1: Additional beam switching timing delay d

| µPDCCH | d [PDCCH symbols] |
|--------|--------------------|
| 0 | 8 |
| 1 | 8 |
| 2 | 14 |
| 3 | 28 |
| 5 | {56, 112} |

Aperiodic CSI-RS timing:

- When the aperiodic CSI-RS is used with aperiodic CSI reporting, the CSI-RS triggering offset X is configured per resource set by the higher layer parameter aperiodicTriggeringOffset or aperiodicTriggeringOffset-r16, including the case that the UE is not configured with minimumSchedulingOffsetK0 for any DL BWP or minimumSchedulingOffsetK2 for any UL BWP and all the associated trigger states do not have the higher layer parameter qcl-Type set to 'typeD' in the corresponding TCI states. The CSI-RS triggering offset has the values of {0, 1, ..., 31} slots when the µPDCCH < µCSIRS and {0, 1, 2, 3, 4, 5, 6, ..., 15, 16, 24} when the µPDCCH > µCSIRS.. The aperiodic CSI-RS is transmitted in a slot

$$\left\lfloor n \cdot \frac{2^{\mu_{CSIRS}}}{2^{\mu_{PDCCH}}} \right\rfloor + X + \left\lfloor \left( \frac{N^{CA}_{slot,offset,PDCCH}}{2^{\mu_{offset,PDCCH}}} - \frac{N^{CA}_{slot,offset,CSIRS}}{2^{\mu_{offset,CSIRS}}} \right) \cdot 2^{\mu_{CSIRS}} \right\rfloor$$ , if UE is configured with ca-

SlotOffset for at least one of the triggered and triggering cell, and Ks = $\left\lfloor n \cdot \dfrac{2^{\mu_{CSIRS}}}{2^{\mu_{PDCCH}}} \right\rfloor + X$, otherwise, and where

- n is the slot containing the triggering DCI, X is the CSI-RS triggering offset in the numerology of CSI-RS according to the higher layer parameter aperiodicTriggeringOffset or aperiodicTriggeringOffset-r16,

- $\mu_{CSIRS}$ and $\mu_{PDCCH}$ are the subcarrier spacing configurations for CSI-RS and PDCCH, respectively,

- $N_{\text{slot, offset, PDCCH}}^{\text{CA}}$ and $\mu_{\text{offset,PDCCH}}$ are the $N_{\text{slot, offset}}^{\text{CA}}$ and the $\mu_{\text{offset}}$, respectively, which are determined by higher-layer configured ca-SlotOffset for the cell receiving the PDCCH respectively, $N_{\text{slot, offset, CSIRS}}^{\text{CA}}$ and $\mu_{\text{offset,CSIRS}}$ are the $N_{\text{slot, offset}}^{\text{CA}}$ and the $\mu_{\text{offset}}$, respectively, which are determined by higher-layer configured ca-SlotOffset for the cell transmitting the CSI-RS respectively, as defined in [4, TS 38.211] clause 4.5

- If the μPDCCH < μCSIRS, the UE is expected to be able to measure the aperiodic CSI RS, if the CSI-RS starts no earlier than the first symbol of the CSI-RS carrier's slot that starts at least Ncsirs PDCCH symbols after the end of the PDCCH triggering the aperiodic CSI-RS.

- If the μPDCCH > μCSIRS, the UE is expected to be able to measure the aperiodic CSI RS, if the CSI-RS starts no earlier than at least Ncsirs PDCCH symbols after the end of the PDCCH triggering the aperiodic CSI-RS.

When the PDCCH reception includes two PDCCH candidates from two respective search space sets, as described in clause 10.1 of [6, TS 38.213], for the purpose of determining Ncsirs, the PDCCH candidate that ends later in time is used.

Table 5.2.1.5.1a: Ncsirs as a function of the subcarrier spacing of the triggering PDCCH

| μPDCCH | Ncsirs [symbols] |
|--------|------------------|
| 0 | 4 |
| 1 | 5 |
| 2 | 10 |
| 3 | 14 |

When the triggering PDCCH and the triggered aperiodic CSI-RS are of different numerologies, the CSI request constraint and CSI reporting constraint defined in 5.2.1.5.1 for the case where the numerologies are the same applies with the following additions:

- CSI request constraints:

- A UE is not expected to receive more than one CSI request per reference slot length across all CCs in a cell group, where the SCS of the reference slot is the minimum of SCS of the PDCCH with which the DCI was transmitted, the SCS of the

PUSCH with which the CSI report is to be transmitted, and the SCS of the minimum SCS of the CSI-RS associated to the CSI reports triggered by the DCI. The beginning of a slot length is defined according the PDCCH cell with which the DCI carrying the CSI request is transmitted.

\- CSI reporting constraints:

\- A UE is not expected to receive more than one CSI request for transmission in a given reference slot length across all CCs in a cell group, where the SCS of the reference slot is the minimum of SCS of the PDCCH with which the DCI was transmitted, the SCS of the PUSCH with which the CSI report is to be transmitted, and the SCS of the minimum SCS of the CSI-RS associated to the CSI reports triggered by the DCI. The beginning of a slot length is defined according the PUSCH cell with which the CSI report is transmitted.

As described in [Method #2], an SP-CSI report may be transmitted through a PUCCH or PUSCH. In the case of aperiodic (AP)-CSI reporting, the UE may feed back a CSI value such as a CQI/PMI/RI measured in a CSI-RS corresponding to a code point indicated by the CSI request field in a UL grant that schedules a PUSCH, through the scheduled PUSCH, as illustrated in Table 6. In AP-CSI reporting, a CSI-RS that may be indicated by the CSI request field in the UL grant may be configured by a parameter CSI-AperiodicTriggerStateList.

In periodic (P)-CSI reporting, the UE may feed back a CSI value, such as a CQI/PMI/RI measured in a CSI-RS resource preconfigured by higher layer signaling, through a PUCCH resource preconfigured by higher layer signaling. When the PUCCH resource configured by higher layer signaling overlaps with a PUSCH resource, the UE may also feed back the CSI value in the PUSCH resource.

In this method, a method is proposed in which whether to perform P-CSI reporting with P-CSI reporting ID #Y is determined depending on whether AP-CSI reporting ID #X is triggered by a UL grant. AP-CSI reporting ID #X may mean a CSI triggering state corresponding to a specific code point of the CSI request field of a UL grant, or may mean a CSI triggering state included in CSI-AperiodicTriggerStateList triggered by the UL grant.

For example, when AP-CSI reporting ID #X1 is triggered by the UL grant, the UE may not perform CSI reporting with P-CSI reporting ID #Y. The CSI reporting with P-CSI reporting ID #Y may be performed again after a specific time (e.g., T1). The value of the specific time (e.g., T1) may be predefined or set/indicated by higher layer signaling or by a MAC CE or DCI. Alternatively, after a plurality of time candidate values are configured by higher layer signaling, one of the plurality of time candidate values may be indicated by a MAC CE or DCI.

Alternatively, when AP-CSI reporting ID #X2 is triggered by the UL grant, the UE may perform CSI reporting with P-CSI reporting ID #Y. In this case, linkage between AP-CSI reporting ID #X1 and P-CSI reporting ID #Y and/or linkage between AP-CSI reporting ID #X2 and P-CSI reporting ID #Y may be preconfigured. For example, it may be configured by higher layer signaling.

Alternatively, when the number of antenna ports for an (NZP) CSI-RS resource linked to AP-CSI reporting ID #X1 is N1 and the number of antenna ports for an (NZP) CSI-RS resource linked to P-CSI reporting ID #Y is N2, N1 may be a value equal to or less than N2.

In other words, when AP-CSI reporting corresponding to the smaller number of antenna ports is triggered, some antenna port elements of the BS may be considered to be turned off, and P-CSI reporting linked to the larger number of antenna ports may not be performed.

Further, when the number of antenna ports for an (NZP) CSI-RS resource linked to AP-CSI reporting ID #X2 is N3 and the number of antenna ports for an (NZP) CSI-RS resource linked to P-CSI reporting ID #Y is N2, N3 may be a value equal to or greater than N2.

In other words, when AP-CSI reporting corresponding to the larger number of antenna ports is triggered, it may be considered that more antenna port elements of the BS are turned on, and P-CSI reporting linked to the same or smaller number of antenna ports may be performed.

When each of AP-CSI reporting ID #X1, AP-CSI reporting ID #X2, and/or P-CSI reporting ID #Y is linked to a plurality of CSI-RS resources, each of N1, N2, and N3 values may be the minimum or maximum of the numbers of antenna ports for a plurality of CSI-RS resources linked to a corresponding reporting ID, or the number of antenna ports corresponding to a specific CSI-RS.

In another method, whether to perform P-CSI reporting with P-CSI reporting ID #Y may be determined depending on whether SP-CSI reporting ID #X is activated. The activation/deactivation of SP-CSI reporting ID #X may mean that corresponding CSI reporting configuration ID #X or CSI-RS resource set configuration ID #X is activated/deactivated by DCI or a MAC CE indicating activation/deactivation, as described in the above [Method #2].

For example, when SP-CSI reporting ID #X1 is activated by a UL grant, the CSI reporting with P-CSI reporting ID #Y may not be performed by the UE. The CSI reporting with P-CSI reporting ID #Y may be performed again after a specific time (e.g., T1) or when SP-CSI reporting ID #X1 is deactivated, CSI reporting with P-CSI reporting ID #Y may be performed again. The value of the specific time (e.g., T1) may be predefined or set/indicated by higher layer signaling or by a MAC CE or DCI.

Alternatively, after a plurality of time candidate values are set by higher layer signaling, one of the plurality of time candidate values may be indicated by a MAC CE or DCI.

Alternatively, when SP-CSI reporting ID #X2 is activated, the UE may perform CSI reporting with P-CSI reporting ID #Y. In this case, linkage between SP-CSI reporting ID #X1 and P-CSI reporting ID #Y and/or linkage between SP-CSI reporting ID #X2 and P-CSI reporting ID #Y may be preconfigured. For example, it may be configured by higher layer signaling.

Alternatively, when the number of antenna ports for an (NZP) CSI-RS resource linked to SP-CSI reporting ID #X1 is N1 and the number of antenna ports for an (NZP) CSI-RS resource linked to P-CSI reporting ID #Y is N2, N1 may be a value equal to or less than N2.

In other words, when SP-CSI reporting corresponding to the smaller number of antenna ports is triggered, some antenna port elements of the BS are considered to be turned off, and P-CSI reporting linked to the larger number of antenna ports may not be performed.

Further, when the number of antenna ports for an (NZP) CSI-RS resource linked to SP-CSI reporting ID #X2 is N3 and the number of antenna ports for an (NZP) CSI-RS resource linked to P-CSI reporting ID #Y is N2, N3 may be a value equal to or greater than N2.

In other words, when SP-CSI reporting corresponding to the larger number of antenna ports is triggered, it may be considered that more antenna port elements of the BS are turned on, and P-CSI reporting linked to the same or smaller number of antenna ports may be performed.

When each of SP-CSI reporting ID #X1, SP-CSI reporting ID #X2, and/or P-CSI reporting ID #Y is linked to a plurality of CSI-RS resources, each of the N1, N2, and N3 values may be the minimum or maximum of the numbers of antenna ports for the plurality of CSI-RS resources linked to a corresponding reporting ID, or the number of antenna ports corresponding to a specific CSI-RS.

In the disclosure, not performing AP/SP/P-CSI reporting may mean that the UE omits a reception/measurement operation for an RS (e.g., CSI-RS or SSB) linked to a corresponding CSI reporting configuration.

According to [Method #5], the power consumption of the BS may be reduced by adjusting the number of antenna ports and the timing and/or number of times of CSI reporting based on antenna ports and a CSI reporting type which are linked to a CSI-RS resource.

The various descriptions, functions, procedures, proposals, methods, and/or operation flowcharts of the disclosure described herein may be applied to, but not limited to, various fields requiring wireless communication/connectivity (e.g., 5G) between devices.

More specific examples will be described below with reference to the drawings. In the following drawings/description, like reference numerals denote the same or corresponding hardware blocks, software blocks, or function blocks, unless otherwise specified.

FIG. 12 illustrates a communication system 1 applied to the disclosure.

Referring to FIG. 12, the communication system 1 applied to the disclosure includes wireless devices, BSs, and a network. A wireless device is a device performing communication using radio access technology (RAT) (e.g., 5G NR (or New RAT) or LTE), also referred to as a communication/radio/5G device. The wireless devices may include, not limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of vehicle-to-vehicle (V2V) communication. Herein, the vehicles may include an unmanned aerial vehicle (UAV) (e.g., a drone). The XR device may include an augmented reality (AR)/virtual reality (VR)/mixed reality (MR) device and may be implemented in the form of a head-mounted device (HMD), a head-up display (HUD) mounted in a vehicle, a television (TV), a smartphone, a computer, a wearable device, a home appliance, a digital signage, a vehicle, a robot, and so on. The hand-held device may include a smartphone, a smartpad, a wearable device (e.g., a smartwatch or smartglasses), and a computer (e.g., a laptop). The home appliance may include a TV, a refrigerator, a washing machine, and so on. The IoT device may include a sensor, a smartmeter, and so on. For example, the BSs and the network may be implemented as wireless devices, and a specific wireless device 200a may operate as a BS/network node for other wireless devices.

The wireless devices 100a to 100f may be connected to the network 300 via the BSs 200. An AI technology may be applied to the wireless devices 100a to 100f, and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without intervention of the BSs/network. For example, the vehicles 100b-1 and 100b-2 may perform direct communication (e.g. V2V/vehicle-to-everything (V2X) communication). The IoT device (e.g., a sensor) may perform direct communication with other IoT devices (e.g., sensors) or other wireless devices 100a to 100f.

Wireless communication/connections 150a, 150b, and 150c may be established between the wireless devices 100a to 100f/BS 200 and between the BSs 200. Herein, the wireless communication/connections may be established through various RATs (e.g., 5G NR) such as UL/DL communication 150a, sidelink communication 150b (or, D2D communication), or inter-BS communication (e.g. relay or integrated access backhaul(IAB)). Wireless signals may be transmitted and received between the wireless devices, between the wireless devices and the BSs, and between the BSs through the wireless communication/connections 150a, 150b, and 150c. For example, signals may be transmitted and receive don various physical channels through the wireless communication/connections 150a, 150b and 150c. To this end, at least a part of various configuration information configuring processes, various signal processing processes (e.g., channel encoding/decoding, modulation/demodulation, and resource mapping/demapping), and resource allocation processes, for transmitting/receiving wireless signals, may be performed based on the various proposals of the disclosure.

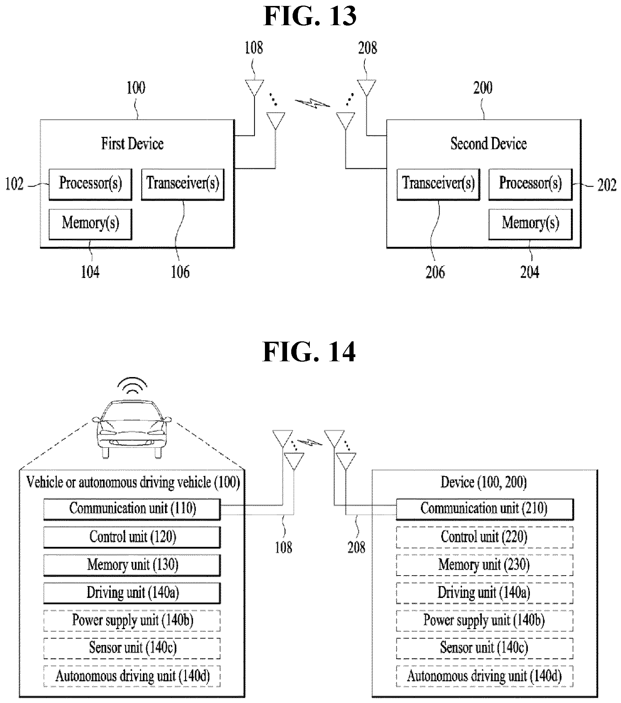

FIG. 13 illustrates wireless devices applicable to the disclosure.

Referring to FIG. 13, a first wireless device 100 and a second wireless device 200 may transmit wireless signals through a variety of RATs (e.g., LTE and NR). {The first wireless device 100 and the second wireless device 200} may correspond to {the wireless device 100x and the BS 200} and/or {the wireless device 100x and the wireless device 100x} of FIG. 12.

The first wireless device 100 may include one or more processors 102 and one or more memories 104, and further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operation flowcharts disclosed in this document. For example, the processor(s) 102 may process information in the memory(s) 104 to generate first information/signals and then transmit wireless signals including the first information/signals through the transceiver(s) 106. The processor(s) 102 may receive wireless signals including second information/signals through the transceiver(s) 106 and then store information obtained by processing the second information/signals in the memory(s) 104. The memory(s) 104 may be connected to the processor(s) 102 and may store various pieces of information related to operations of the processor(s) 102. For example, the memory(s) 104 may store software code including instructions for performing all or a part of processes controlled by the processor(s) 102 or for performing the descriptions, functions, procedures, proposals, methods, and/or operation flowcharts disclosed in this document. The processor(s) 102 and the memory(s) 104 may be a part of a communication modem/circuit/chip designed to implement RAT (e.g., LTE or NR). The transceiver(s) 106 may be connected to the processor(s) 102 and transmit and/or receive wireless signals through the one or more antennas 108. Each of the transceiver(s) 106 may include a transmitter and/or a receiver. The transceiver(s) 106 may be interchangeably used with radio frequency (RF) unit(s). In the disclosure, the wireless device may be a communication modem/circuit/chip. Specifically, instructions and/or operations, controlled by the processor 102 of the first wireless device 100 and stored in the memory 104 of the first wireless device 100, according to an embodiment of the disclosure will be described.

Although the following operations will be described based on a control operation of the processor 102 in terms of the processor 102, software code for performing such an operation may be stored in the memory 104. For example, in the disclosure, the at least one memory 104 may be a computer-readable storage medium and may store instructions or programs. The instructions or programs may cause, when executed, the at least one processor operably connected to the at least one memory to perform operations according to embodiments or implementations of the disclosure, related to the following operations.

For example, the processor 102 may receive first information related to a plurality of CSI-RS resource sets or a plurality of CSI-RS resources and second information related to a CSI-RS group index for each of plurality of CSI-RS resource sets or each of the plurality of CSI-RS resources through the transceiver 106. Each CSI-RS group index may be associated with a different number of antenna ports. For example, a CSI-RS resource or CSI-RS resource set included in CSI-RS group index #0 may be associated with N1 antenna ports, and a CSI-RS resource or CSI-RS resource set included in CSI-RS group index #1 may be associated with N2 antenna ports.

The processor 102 may receive DCI and/or a MAC CE that activates at least one of configured CSI-RS group indexes through the transceiver 106. For example, the processor 102 may control the transceiver 106 to receive DCI that activates at least one CSI-RS group index through a GC-PDCCH.

The processor 102 may receive a CSI-RS based on the received DCI and/or MAC CE through the transceiver 106. For example, when the processor 102 receives the DCI through the GC-PDCCH, the processor 102 may receive DCI for triggering the CSI-RS separately through the transceiver 106. Further, the CSI-RS group index and an indicator for triggering the CSI-RS may be included together in the DCI received by the processor 102.

The processor 102 may measure CSI based on the received CSI-RS and report the CSI to a BS through the transceiver 106 (S807).

A specific operation method of the processor 102 may be based on at least one of [Method #1] to [Method #5].

The second wireless device 200 may include one or more processors 202 and one or more memories 204, and further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operation flowcharts disclosed in this document. For example, the processor(s) 202 may process information in the memory(s) 204 to generate third information/signals and then transmit wireless signals including the third information/signals through the transceiver(s) 206. The processor(s) 202 may receive wireless signals including fourth information/signals through the transceiver(s) 106 and then store information obtained by processing the fourth information/signals in the memory(s) 204. The memory(s) 204 may be connected to the processor(s) 202 and store various pieces of information related to operations of the processor(s) 202. For example, the memory(s) 204 may store software code including instructions for performing all or a part of processes controlled by the processor(s) 202 or for performing the descriptions, functions, procedures, proposals, methods, and/or operation flowcharts disclosed in this document. The processor(s) 202 and the memory(s) 204 may be a part of a communication modem/circuit/chip designed to implement RAT (e.g., LTE or NR). The transceiver(s) 206 may be connected to the processor(s) 202 and transmit and/or receive wireless signals through the one or more antennas 208. Each of the transceiver(s) 206 may include a transmitter and/or a receiver. The transceiver(s) 206 may be interchangeably used with RF unit(s). In the disclosure, the wireless device may be a communication modem/circuit/chip.

Specifically, instructions and/or operations, controlled by the processor 202 of the second wireless device 100 and stored in the memory 204 of the second wireless device 200, according to an embodiment of the disclosure will be described. Although the following operations will be described based on a control operation of the processor 202 in terms of the processor 202, software code for performing such an operation may be stored in the memory 204. For example, in the disclosure, the at least one memory 204 may be a computer-readable storage medium and may store instructions or programs. The instructions or programs may cause, when executed, the at least one processor operably connected to the at least one memory to perform operations according to embodiments or implementations of the disclosure, related to the following operations.

For example, the processor 202 may transmit first information related to a plurality of CSI-RS resource sets or a plurality of CSI-RS resources and second information related to a CSI-RS group index for each of plurality of CSI-RS resource sets or each of the plurality of CSI-RS resources through the transceiver 206. Each CSI-RS group index may be associated with a different number of antenna ports. For example, a CSI-RS resource or CSI-RS resource set included in CSI-RS group index #0 may be associated with N1 antenna ports, and a CSI-RS resource or CSI-RS resource set included in CSI-RS group index #1 may be associated with N2 antenna ports.

The processor 202 may transmit DCI and/or a MAC CE that activates at least one of configured CSI-RS group indexes through the transceiver 206. For example, the processor 202 may control the transceiver 206 to receive DCI that activates at least one CSI-RS group index through a GC-PDCCH.

The processor 202 may transmit a CSI-RS based on the transmitted DCI and/or MAC CE through the transceiver 206. For example, when the processor 202 transmits the DCI through the GC-PDCCH, the processor 202 may transmit DCI for triggering the CSI-RS separately through the transceiver 206. Further, the CSI-RS group index and an indicator for triggering the CSI-RS may be included together in the DCI transmitted by the processor 202.

The processor 202 may receive CSI measured based on the transmitted CSI-RS through the transceiver 206.

A specific operation method of the processor 202 may be based on at least one of [Method #1] to [Method #5].

Now, hardware elements of the wireless devices 100 and 200 will be described in greater detail. One or more protocol layers may be implemented by, not limited to, one or more processors 102 and 202. For example, the one or more processors 102 and 202 may implement one or more layers (e.g., functional layers such as physical (PHY), medium access control (MAC), radio link control (RLC), packet data convergence protocol (PDCP), RRC, and service data adaptation protocol (SDAP)). The one or more processors 102 and 202 may generate one or more protocol data units (PDUs) and/or one or more service data Units (SDUs) according to the descriptions, functions, procedures, proposals, methods, and/or operation flowcharts disclosed in this document. The one or more processors 102 and 202 may generate messages, control information, data, or information according to the descriptions, functions, procedures, proposals, methods, and/or operation flowcharts disclosed in this document and provide the messages, control information, data, or information to one or more transceivers 106 and 206. The one or more processors 102 and 202 may generate signals (e.g., baseband signals) including PDUs, SDUs, messages, control information, data, or information according to the descriptions, functions, procedures, proposals, methods, and/or operation flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operation flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. For example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The descriptions, functions, procedures, proposals, methods, and/or operation flowcharts disclosed in this document may be implemented using firmware or software, and the firmware or software may be configured to include the modules, procedures, or functions. Firmware or software configured to perform the descriptions, functions, procedures, proposals, methods, and/or operation flowcharts disclosed in this document may be included in the one or more processors 102 and 202 or may be stored in the one or more memories 104 and 204 and executed by the one or more processors 102 and 202. The descriptions, functions, procedures, proposals, methods, and/or operation flowcharts disclosed in this document may be implemented using firmware or software in the form of code, an instruction, and/or a set of instructions.

The one or more memories 104 and 204 may be connected to the one or more processors 102 and 202 and store various types of data, signals, messages, information, programs, code, instructions, and/or commands. The one or more memories 104 and 204 may be configured to include read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or wireless signals/channels, mentioned in the methods and/or operation flowcharts of this document, to one or more other devices. The one or more transceivers 106 and 206 may receive user data, control information, and/or wireless signals/channels, mentioned in the descriptions, functions, procedures, proposals, methods, and/or operation flowcharts disclosed in this document, from one or more other devices. For example, the one or more transceivers 106 and 206 may be connected to the one or more processors 102 and 202 and transmit and receive wireless signals. For example, the one or more processors 102 and 202 may perform control so that the one or more transceivers 106 and 206 may transmit user data, control information, or wireless signals to one or more other devices. The one or more processors 102 and 202 may perform control so that the one or more transceivers 106 and 206 may receive user data, control information, or wireless signals from one or more other devices. The one or more transceivers 106 and 206 may be connected to the one or more antennas 108 and 208 and the one or more transceivers 106 and 206 may be configured to transmit and receive user data, control information, and/or wireless signals/channels, mentioned in the descriptions, functions, procedures, proposals, methods, and/or operation flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received wireless signals/channels from RF band signals into baseband signals in order to process received user data, control information, and wireless signals/channels using the one or more processors 102 and 202. The one or more transceivers 106 and 206 may convert the user data, control information, and wireless signals/channels processed using the one or more processors 102 and 202 from the baseband signals into the RF band signals. To this end, the one or more transceivers 106 and 206 may include (analog) oscillators and/or filters.

FIG. 14 illustrates a vehicle or an autonomous driving vehicle applied to the disclosure. The vehicle or autonomous driving vehicle may be implemented as a mobile robot, a car, a train, a manned/unmanned aerial vehicle (AV), a ship, or the like.

Referring to FIG. 14, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an ECU. The driving unit 140a may enable the vehicle or the autonomous driving vehicle 100 to drive on a road. The driving unit 140a may include an engine, a motor, a powertrain, a wheel, a brake, a steering device, and so on. The power supply unit 140b may supply power to the vehicle or the autonomous driving vehicle 100 and include a wired/wireless charging circuit, a battery, and so on. The sensor unit 140c may acquire information about a vehicle state, ambient environment information, user information, and so on. The sensor unit 140c may include an inertial measurement unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, and so on. The autonomous driving unit 140d may implement technology for maintaining a lane on which the vehicle is driving, technology for automatically adjusting speed, such as adaptive cruise control, technology for autonomously driving along a determined path, technology for driving by automatically setting a route if a destination is set, and the like.

For example, the communication unit 110 may receive map data, traffic information data, and so on from an external server. The autonomous driving unit 140d may generate an autonomous driving route and a driving plan from the obtained data. The control unit 120 may control the driving unit 140a such that the vehicle or autonomous driving vehicle 100 may move along the autonomous driving route according to the driving plan (e.g., speed/direction control). During autonomous driving, the communication unit 110 may aperiodically/periodically acquire recent traffic information data from the external server and acquire surrounding traffic information data from neighboring vehicles. During autonomous driving, the sensor unit 140c may obtain information about a vehicle state and/or surrounding environment information. The autonomous driving unit 140d may update the autonomous driving route and the driving plan based on the newly obtained data/information. The communication unit 110 may transfer information about a vehicle position, the autonomous driving route, and/or the driving plan to the external server. The external server may predict traffic information data using AI technology based on the information collected from vehicles or autonomous driving vehicles and provide the predicted traffic information data to the vehicles or the autonomous driving vehicles.

The embodiments of the disclosure described herein below are combinations of elements and features of the disclosure. The elements or features may be considered selective unless otherwise mentioned. Each element or feature may be practiced without being combined with other elements or features. Further, an embodiment of the disclosure may be constructed by combining parts of the elements and/or features. Operation orders described in embodiments of the disclosure may be rearranged. Some constructions of any one embodiment may be included in another embodiment and may be replaced with corresponding constructions of another embodiment. It will be obvious to those skilled in the art that claims that are not explicitly cited in each other in the appended claims may be presented in combination as an embodiment of the disclosure or included as a new claim by a subsequent amendment after the application is filed.

In the disclosure, a specific operation described as performed by the BS may be performed by an upper node of the BS in some cases. Namely, it is apparent that, in a network comprised of a plurality of network nodes including a BS, various operations performed for communication with an MS may be performed by the BS, or network nodes other than the BS. The term 'BS' may be replaced with the term 'fixed station', 'Node B', 'enhanced Node B (eNode B or eNB)', 'access point', etc.

Those skilled in the art will appreciate that the disclosure may be carried out in other specific ways than those set forth herein without departing from the spirit and essential characteristics of the disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

[Industrial Applicability]

While the above-described method of transmitting and receiving reference signals for channel state information and the apparatus therefor have been described based on an example applied to a 5G NR system, the method and apparatus are applicable to various wireless communication systems in addition to the 5G NR system.

**Claims**

1.  A method of receiving a channel state information-reference signal (CSI-RS) by a user equipment (UE) in a wireless communication system, the method comprising:

    receiving first information related to a first CSI group associated with at least one first CSI-RS resource and a second CSI group associated with at least one second CSI-RS resource;
    receiving second information informing that the first CSI group among the first CSI group and the second CSI group is available; and
    receiving the CSI-RS through the at least one first CSI-RS resource,
    wherein the at least one first CSI-RS resource corresponds to a first number of antenna ports, and the at least one second CSI-RS resource corresponds to a second number of antenna ports, and
    wherein the first number of the antenna ports and the second number of antenna ports are different.

2.  The method according to claim 1, wherein the at least one first CSI-RS resource is related to first codebook configuration information, and the at least one second CSI-RS resource is related to second codebook configuration information.

3. The method according to claim 1, wherein the first number of antenna ports is less than the second number of antenna ports.

4. The method according to claim 1, wherein a physical downlink shared channel (PDSCH) having a quasi co-located (QCL) relationship with the at least one second CSI-RS resource is not received.

5. The method according to claim 1, further comprising:

   receiving a PDSCH corresponding to a plurality of transmission configuration indicator (TCI) states, wherein the PDSCH is received based on a TCI state associated with the at least one first CSI-RS resource among the plurality of TCI states.

6. The method according to claim 1, wherein the CSI-RS is not received through the at least one second CSI-RS resource.

7. The method according to claim 1, wherein the at least one first CSI-RS resource and the at least one second CSI-RS resource are included in the same CSI-RS resource set.

8. The method according to claim 1, wherein the at least one first CSI-RS resource and the at least one second CSI-RS resource are included in different CSI-RS resource sets.

9. A user equipment (UE) for receiving a channel state information-reference signal (CSI-RS) in a wireless communication system, the UE comprising:

   at least one transceiver;
   at least one processor; and
   at least one memory operably connected to the at least one processor and storing instructions which when executed, cause the at least one processor to perform operations comprising:

      receiving first information related to a first CSI group associated with at least one first CSI-RS resource and a second CSI group associated with at least one second CSI-RS resource through the at least one transceiver;
      receiving second information informing that the first CSI group among the first CSI group and the second CSI group is available through the at least one transceiver; and
      receiving the CSI-RS through the at least one first CSI-RS resource through the at least one transceiver, wherein the at least one first CSI-RS resource corresponds to a first number of antenna ports, and the at least one second CSI-RS resource corresponds to a second number of antenna ports, and
      wherein the first number of the antenna ports and the second number of antenna ports are different.

10. The UE according to claim 9, wherein the at least one first CSI-RS resource is related to first codebook configuration information, and the at least one second CSI-RS resource is related to second codebook configuration information.

11. The UE according to claim 9, wherein the first number of antenna ports is less than the second number of antenna ports.

12. The UE according to claim 9, wherein a physical downlink shared channel (PDSCH) having a quasi co-located (QCL) relationship with the at least one second CSI-RS resource is not received.

13. The UE according to claim 9, wherein the operations further comprise:

    receiving a PDSCH corresponding to a plurality of transmission configuration indicator (TCI) states, and wherein the PDSCH is received based on a TCI state associated with the at least one first CSI-RS resource among the plurality of TCI states.

14. The UE according to claim 9, wherein the CSI-RS is not received through the at least one second CSI-RS resource.

15. The UE according to claim 9, wherein the at least one first CSI-RS resource and the at least one second CSI-RS resource are included in the same CSI-RS resource set.

16. The UE according to claim 9, wherein the at least one first CSI-RS resource and the at least one second CSI-RS resource are included in different CSI-RS resource sets.

17. An apparatus for receiving a channel state information-reference signal (CSI-RS) in a wireless communication system, the apparatus comprising:

at least one processor; and
at least one memory operably connected to the at least one processor and storing instructions which when executed, cause the at least one processor to perform operations comprising:

receiving first information related to a first CSI group associated with at least one first CSI-RS resource and a second CSI group associated with at least one second CSI-RS resource;
receiving second information informing that the first CSI group out of the first CSI group and the second CSI group is available; and
receiving the CSI-RS through the at least one first CSI-RS resource,
wherein the at least one first CSI-RS resource corresponds to a first number of antenna ports, and the at least one second CSI-RS resource corresponds to a second number of antenna ports, and
wherein the first number of the antenna ports and the second number of antenna ports are different.

18. A computer-readable storage medium including at least one computer program causing at least one processor to perform operations comprising:

receiving first information related to a first channel state information (CSI) group associated with at least one first channel state information-reference signal (CSI-RS) resource and a second CSI group associated with at least one second CSI-RS resource;
receiving second information informing that the first CSI group out of the first CSI group and the second CSI group is available; and
receiving the CSI-RS through the at least one first CSI-RS resource,
wherein the at least one first CSI-RS resource corresponds to a first number of antenna ports, and the at least one second CSI-RS resource corresponds to a second number of antenna ports, and
wherein the first number of the antenna ports and the second number of antenna ports are different.

19. A method of transmitting a channel state information-reference signal (CSI-RS) by a base station (BS) in a wireless communication system, the method comprising:

transmitting first information related to a first CSI group associated with at least one first CSI-RS resource and a second CSI group associated with at least one second CSI-RS resource;
transmitting second information informing that the first CSI group out of the first CSI group and the second CSI group is available; and
transmitting the CSI-RS through the at least one first CSI-RS resource,
wherein the at least one first CSI-RS resource corresponds to a first number of antenna ports, and the at least one second CSI-RS resource corresponds to a second number of antenna ports, and
wherein the first number of the antenna ports and the second number of antenna ports are different.

20. A base station (BS) for transmitting a channel state information-reference signal (CSI-RS) in a wireless communication system, the BS comprising:

at least one transceiver;
at least one processor; and
at least one memory operably connected to the at least one processor and storing instructions which when executed, cause the at least one processor to perform operations comprising:

transmitting first information related to a first CSI group associated with at least one first CSI-RS resource and a second CSI group associated with at least one second CSI-RS resource through the at least one transceiver;
transmitting second information informing that the first CSI group out of the first CSI group and the second CSI group is available through the at least one transceiver; and
transmitting the CSI-RS through the at least one first CSI-RS resource through the at least one transceiver,

wherein the at least one first CSI-RS resource corresponds to a first number of antenna ports, and the at least one second CSI-RS resource corresponds to a second number of antenna ports, and
wherein the first number of the antenna ports and the second number of antenna ports are different.

# FIG. 1

FIG. 2

# FIG. 3

# FIG. 4

# FIG. 5

(a)

(b)

# FIG. 6

UE                                                                    BS

NZP CSI-RS resource set IE ⟶ S610

CSI resource(s) configured with repetition 'ON'
through same Tx beam ⟶ S620

| Determine Rx beam | ⟵ S630

Omit CSI reporting (no report) ⟶ S640

(a)


UE                                                                    BS

NZP CSI-RS resource set IE ⟶ S650

CSI resouece(s) configured with repetition 'OFF'
through different Tx beam ⟶ S660

| Determine best beam | ⟵ S670

CSI report (CRI / RSRP) ⟶ S680

(b)

## FIG. 7

Repetition "on"
Repetition "off"

0 1 2 3 4 5 6 7 8 9 10 11 12 13

frequency domain

Resource #0
Resource #1
Resource #2

RX beam sweeping

TX beam sweeping

time domain

## FIG. 8

Receive (i) first information related to a plurality of CSI-RS resource sets (or a plurality of CSI-RS resources) and (ii) second information related to CSI group index for each of the plurality of CSI-RS resource sets (or the plurality of CSI-RS resources) — S801

Receive DCI (or MAC CE) including activated CSI group index — S803

Receive CSI-RS based on DCI (or MAC CE) — S805

Report CSI based on CSI-RS — S807

# FIG. 9

| Transmit (i) first information related to a plurality of CSI-RS resource sets (or a plurality of CSI-RS resources) and (ii) second information related to CSI group index for each of the plurality of CSI-RS resource sets (or the plurality of CSI-RS resources) | S901 |

↓

| Transmit DCI (or MAC CE) including activated CSI group index | S903 |

↓

| Transmit CSI-RS based on DCI (or MAC CE) | S905 |

↓

| Receive CSI based on CSI-RS | S907 |

# FIG. 10

UE                                                                    BS

Transmit (i) first information related to a plurality of CSI-RS
resource sets (or a plurality of CSI-RS resources) and (ii) second
information related to CSI group index for each of the plurality of
CSI-RS resource sets (or the plurality of CSI-RS resources)        S1001

Transmit DCI (or MAC CE) including activated CSI group index       S1003

Transmit CSI-RS based on DCI (or MAC CE)                           S1005

Report CSI based on CSI-RS                                         S1007

# FIG. 11

| A/D | Serving Cell ID | | BWP ID | Oct 1 |
|-----|------|------|--------|-------|
| R | IM | SP CSI-RS resource set ID | | Oct 2 |
| R | R | SP CSI-IM resource set ID | | Oct 3 |
| R | TCI State ID$_0$ | | | Oct 4 |

...

| R | TCI State ID$_N$ | Oct N+4 |
|---|------------------|---------|

# FIG. 12

<u>1</u>

# FIG. 13

108    208

100    200

First Device    Second Device

102 — Processor(s)  Transceiver(s)    Transceiver(s)  Processor(s) — 202

Memory(s)    Memory(s)

104    106    206    204

# FIG. 14

Vehicle or autonomous driving vehicle (100)    Device (100, 200)

Communication unit (110)    Communication unit (210)

Control unit (120)    Control unit (220)

Memory unit (130)    Memory unit (230)

Driving unit (140a)    Driving unit (140a)

Power supply unit (140b)    Power supply unit (140b)

Sensor unit (140c)    Sensor unit (140c)

Autonomous driving unit (140d)    Autonomous driving unit (140d)

108    208

## INTERNATIONAL SEARCH REPORT

| International application No. |
|---|
| **PCT/KR2023/004654** |

### A. CLASSIFICATION OF SUBJECT MATTER

**H04W 52/02**(2009.01)i; **H04B 7/06**(2006.01)i; **H04W 72/23**(2023.01)i; **H04W 76/28**(2018.01)i; **H04B 7/08**(2006.01)i

According to International Patent Classification (IPC) or to both national classification and IPC

### B. FIELDS SEARCHED

Minimum documentation searched (classification system followed by classification symbols)

H04W 52/02(2009.01); H04B 7/04(2006.01); H04B 7/06(2006.01); H04L 5/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: CSI-RS(Channel State Information – Reference Signal), 자원(resource), CSI 그룹 (group), 이용 가능 지시(instruction available), 안테나 포트 수(number of antenna ports)

### C. DOCUMENTS CONSIDERED TO BE RELEVANT

| Category* | Citation of document, with indication, where appropriate, of the relevant passages | Relevant to claim No. |
|---|---|---|
| Y | KR 10-2016-0121392 A (INNOVATIVE TECHNOLOGY LAB CO., LTD.) 19 October 2016 (2016-10-19)<br>See paragraphs [0071] and [0094]-[0103]; and figure 10. | 1-20 |
| Y | US 2019-0089436 A1 (QUALCOMM INCORPORATED) 21 March 2019 (2019-03-21)<br>See claim 1. | 1-20 |
| Y | KR 10-2018-0013611 A (SAMSUNG ELECTRONICS CO., LTD.) 07 February 2018 (2018-02-07)<br>See paragraph [0170]. | 2,10 |
| Y | WO 2021-066624 A1 (LG ELECTRONICS INC.) 08 April 2021 (2021-04-08)<br>See paragraph [0221]. | 5,13 |
| A | KR 10-2017-0112811 A (INNOVATIVE TECHNOLOGY LAB CO., LTD.) 12 October 2017 (2017-10-12)<br>See paragraphs [0083]-[0101]; and figure 10. | 1-20 |

| ☐ Further documents are listed in the continuation of Box C. | ☑ See patent family annex. |
|---|---|

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **20 July 2023** | **20 July 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

| International application No. |
|---|
| **PCT/KR2023/004654** |

| Patent document cited in search report | | | Publication date (day/month/year) | Patent family member(s) | | | Publication date (day/month/year) |
|---|---|---|---|---|---|---|---|
| KR | 10-2016-0121392 | A | 19 October 2016 | CN | 107852294 | A | 27 March 2018 |
| | | | | CN | 107852294 | B | 24 November 2020 |
| | | | | CN | 109639402 | A | 16 April 2019 |
| | | | | CN | 109639402 | B | 12 May 2020 |
| | | | | CN | 111478761 | A | 31 July 2020 |
| | | | | CN | 111478761 | B | 18 October 2022 |
| | | | | CN | 112311435 | A | 02 February 2021 |
| | | | | CN | 112383337 | A | 19 February 2021 |
| | | | | CN | 112491524 | A | 12 March 2021 |
| | | | | KR | 10-1955940 | B1 | 08 March 2019 |
| | | | | KR | 10-2144427 | B1 | 13 August 2020 |
| | | | | KR | 10-2180227 | B1 | 18 November 2020 |
| | | | | KR | 10-2415630 | B1 | 30 June 2022 |
| | | | | US | 10256963 | B2 | 09 April 2019 |
| | | | | US | 10554372 | B2 | 04 February 2020 |
| | | | | US | 11515984 | B2 | 29 November 2022 |
| | | | | US | 2016-0301511 | A1 | 13 October 2016 |
| | | | | US | 2019-0215131 | A1 | 11 July 2019 |
| | | | | US | 2020-0127797 | A1 | 23 April 2020 |
| | | | | US | 2023-0078430 | A1 | 16 March 2023 |
| | | | | WO | 2016-163797 | A1 | 13 October 2016 |
| US | 2019-0089436 | A1 | 21 March 2019 | CN | 109155926 | A | 04 January 2019 |
| | | | | CN | 109155926 | B | 27 May 2022 |
| | | | | EP | 3453201 | A1 | 13 March 2019 |
| | | | | EP | 3453201 | A4 | 11 December 2019 |
| | | | | US | 10727920 | B2 | 28 July 2020 |
| | | | | WO | 2017-190273 | A1 | 09 November 2017 |
| | | | | WO | 2017-190626 | A1 | 09 November 2017 |
| KR | 10-2018-0013611 | A | 07 February 2018 | CN | 107666341 | A | 06 February 2018 |
| | | | | CN | 107666341 | B | 29 March 2022 |
| | | | | EP | 3276848 | A1 | 31 January 2018 |
| | | | | KR | 10-2414697 | B1 | 29 June 2022 |
| | | | | US | 10148334 | B2 | 04 December 2018 |
| | | | | US | 10498424 | B2 | 03 December 2019 |
| | | | | US | 11165479 | B2 | 02 November 2021 |
| | | | | US | 2018-0034527 | A1 | 01 February 2018 |
| | | | | US | 2019-0097708 | A1 | 28 March 2019 |
| | | | | US | 2020-0106504 | A1 | 02 April 2020 |
| WO | 2021-066624 | A1 | 08 April 2021 | US | 2022-0322399 | A1 | 06 October 2022 |
| KR | 10-2017-0112811 | A | 12 October 2017 | KR | 10-2457906 | B1 | 24 October 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *3GPP TS 38.214 v17.1.0*

- *3GPP TS 38.214*